(19) Europäisches Patentamt
European Patent Office
Office européen des brevets

(11) **EP 4 318 448 A1**

(12) **EUROPEAN PATENT APPLICATION**

(43) Date of publication:
**07.02.2024 Bulletin 2024/06**

(21) Application number: **23188097.2**

(22) Date of filing: **27.07.2023**

(51) International Patent Classification (IPC):
**G09G 3/20** (2006.01)    **G09G 5/02** (2006.01)

(52) Cooperative Patent Classification (CPC):
**G09G 5/02; G09G 3/2051;** G09G 2340/0428

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.08.2022 US 202217879510**

(71) Applicant: **Meta Platforms Technologies, LLC Menlo Park, CA 94025 (US)**

(72) Inventors:
• **BUCKLEY, Edward**
  **Menlo Park (US)**
• **HUANG, Pin-Chieh**
  **Menlo Park (US)**

(74) Representative: **Murgitroyd & Company Murgitroyd House 165-169 Scotland Street Glasgow G5 8PL (GB)**

(54) **CONSTRAINED COLOR DITHERING**

(57) In one embodiment, a computing system may receive a target image to be displayed on a display. The target image may have a first number of bits per color. The system may access a mask for each color channel of RGB color channels. The accessed masks may be generated based on (1) one or more characteristics of a human visual system, and (2) a subpixel geometry layout of the display. The system may generate an output image based on the target image and the accessed masks. The output image may have a second number of bits per color smaller than the first number of bits per color. The system may display the output image on the display for representing the target image.

**100A**

*FIG. 1A*

EP 4 318 448 A1

**Description**

## TECHNICAL FIELD

This disclosure generally relates to artificial reality, such as virtual reality and augmented reality, and to hardware platforms capable of providing artificial reality content to one or more viewers. Particular embodiments described herein relate to a method of using dither masks to improve the display quality of images having more greyscale levels (i.e., color bits) than the display hardware is capable of reproducing.

## BACKGROUND

Artificial reality is a form of reality that has been adjusted in some manner before presentation to a user, which may include, e.g., a virtual reality (VR), an augmented reality (AR), a mixed reality (MR), a hybrid reality, or some combination and/or derivatives thereof. Artificial reality content may include completely generated content or generated content combined with captured content (e.g., real-world photographs). The artificial reality content may include video, audio, haptic feedback, or some combination thereof, and any of which may be presented in a single channel or in multiple channels (such as stereo video that produces a three-dimensional effect to the viewer). Artificial reality may be associated with applications, products, accessories, services, or some combination thereof, that are, e.g., used to create content in an artificial reality and/or used in (e.g., perform activities in) an artificial reality. The artificial reality system that provides the artificial reality content may be implemented on various platforms, including a head-mounted display (HMD) connected to a host computer system, a standalone HMD, a mobile device or computing system, or any other hardware platform capable of providing artificial reality content to one or more viewers.

## SUMMARY OF PARTICULAR EMBODIMENTS

In accordance with the invention in a first aspect, a method comprises, by a computing system:

receiving a target image to be displayed on a display, the target image having a first number of bits per color;
accessing a mask for each color channel of RGB color channels, wherein the accessed masks are generated based on (1) one or more characteristics of a human visual system, and (2) a subpixel geometry layout of the display;
generating an output image based on the target image and the accessed masks, wherein the output image has a second number of bits per color smaller than the first number of bits per color; and
displaying the output image on the display for representing the target image.

In accordance with the invention in a second aspect, there is provided one or more computer-readable non-transitory storage media embodying software that is operable when executed to:

receive a target image to be displayed on a display, the target image having a first number of bits per color;
access a mask for each color channel of RGB color channels, wherein the accessed masks are generated based on (1) one or more characteristics of a human visual system, and (2) a subpixel geometry layout of the display;
generate an output image based on the target image and the accessed masks, wherein the output image has a second number of bits per color smaller than the first number of bits per color; and
display the output image on the display for representing the target image.

Thus, typically in accordance with the invention in a second aspect, there is provided one or more computer-readable non-transitory storage media embodying software that is operable when executed in association with a suitable display to perform the method of the first aspect.
In accordance with the invention in a third aspect, there is provided a system comprising:

receive a target image to be displayed on a display, the target image having a first number of bits per color;
access a mask for each color channel of RGB color channels, wherein the accessed masks are generated based on (1) one or more characteristics of a human visual system, and (2) a subpixel geometry layout of the display;
generate an output image based on the target image and the accessed masks, wherein the output image has a second number of bits per color smaller than the first number of bits per color; and display the output image on the display for representing the target image.

Thus, typically in accordance with the invention in a third aspect, there is provided a system that is operable in association with a suitable display to perform the method of the first aspect. Preferably the system includes a display.

In some embodiments, the display has the second number of bits per color that is smaller than the first number bits per color of the target image.

In some embodiments, the mask of that color channel comprises a plurality of dot patterns each corresponding to a grayscale level for that color channel, and wherein the plurality of dot patterns satisfies a spatial stacking property.

In some embodiments, each dot pattern of the plurality of dot patterns comprises all dot patterns of lower grayscale levels of that color channel.

In some embodiments, the masks for the RGB color channels satisfy a color stacking property, and wherein a dot that is assigned to a color remains that color when a target color becomes brighter along a color space path starting from black and ending at white.

In some embodiments, the mask for that color channel is generated using a simulated annealing process comprising:

generating a first dot pattern for a target grayscale level of that color channel;
calculating a first perceptual error for the first dot pattern;
generating a second dot pattern by swapping at least one dot in the first dot pattern to a different dot position;
calculating a perceptual error for the second dot pattern; and
determining whether to keep or discard the second dot pattern based on a comparison of the first perceptual error and the second perceptual error.

In some embodiments, the first and second perceptual errors are calculated using a cost function, and wherein the cost function has a first constraint based on the one or more characteristics of the human visual system and a second constraint based the subpixel geometry layout of the display.

In some embodiments, the one or more characteristics of the human visual system are represented by a matrix representing different sensitives of the human visual system at different chromatic channels or within different spatial frequency ranges.

In some embodiments, the subpixel geometric layout of the display is represented by a matrix representing sizes, shapes, and layouts of subpixels of the display.

In some embodiments, the cost function iterates through a plurality of chromatic channels and all dots of a current dot pattern to determine a perceptual error value.

In some embodiments, when the display has a larger subpixel size in a current color channel, the at least one dot comprises a group of dots that are swapped together to represent to a subpixel with the larger subpixel size.

In some embodiments, the at least one dot being swapped is randomly selected, and wherein the at least dot is swapped to the different dot position as constrained by the subpixel geometry layout of the display.

In some embodiments, the mask generated using the simulated annealing process provides a minimized perceptual error value.

Particular embodiments described herein relate to a method of using dither masks to improve the display quality of images having more greyscale levels (i.e., color bits) than the display hardware is capable of reproducing. The dither masks may be generated by taking into consideration of (1) the chromatic channels of the human visual system (HVS) and (2) the subpixel-geometry layout of the display. At a high level, the system may generate a dither mask for each of the RGB color channels. Each mask may include a number of spatially stacked dot patterns each corresponding to a particular grayscale level within a target grayscale level range. The dot patterns in each mask may have a spatial stacking property so that the dot pattern of each grayscale level may include all the dot patterns corresponding to all lower grayscale levels. To determine these mask dot patterns for each grayscale level, the system may first generate the dot patterns for the grayscale levels of 25%, 50%, and 75% (normalized) and then use these dot patterns as constraints to determine the dot patterns for the remaining grayscale levels. The dot pattern for 75% may include all the dots for 50%, which may further include all the dots for 25%. The system may first determine the number of dots (e.g., 50%) for the dot pattern of a particular grayscale level, and then determine the dot distribution using a simulated annealing optimization process. For example, for 50%, the system may use the dot pattern for 25% as the initial dot pattern. Then, the system may allocate additional 25% dots that are non-fixed in positions. Such additional dots may be randomly selected from the remaining non-fixed dots. Then, the system may swap the positions of one pair of dots or one pair of two groups of dots (depending on the subpixel size) of a particular color channel, and calculate a perceptual error using a pre-determined cost function. The dots or dot groups being swapped may be randomly selected in each optimization step. The system may repeat this process to minimize the estimated perceptual error value as determined by the cost function to generate the optimized dither mask(s).

In particular embodiments, the cost function may include the model for the human visual system (HVS), which has different sensitivity in different chromatic channels and different spatial frequency ranges. The cost function may further include the subpixel-geometric layout model, which may represent the geometric sizes, shapes, and layouts of the actual display subpixels of each color channel. During the process of calculating the perceptual error, the cost function itself may iterate through all RGB color channels (in the RGB color space or opponent color space) and all the available dots for this dot pattern to determine an estimated perceptual error value for the current dot pattern with respect to the target grayscale level. Thus, in each optimization step, the perceptual error may be calculated with all three-color channels of RGB being considered, even only one pair of dot or one pair of two groups of dots of a particular color has been swapped in this step. The system may track the estimated perceptual error values and compare with those calculated in previous steps. The system may keep the swapped dot positions, if the error value becomes smaller, and may discard the swapped dot position(s), if the error value become larger. The system may repeat this process until the process converges and the generated dot pattern provides a minimize perceptual error value.

In particular embodiments, the current grayscale value may determine how many dots will be used in its dot pattern (e.g., 50%). The subpixel-geometric layout of the display may determine the constraints for where the dots can be positioned during the simulated annealing process. For example, for a display having stripe RGB subpixels of the same size and positioned vertically, the dots for the red color channel may be positioned in the columns of 1, 4, 7, etc.; the dots for the green color channel may be positioned in the columns of 2, 5, 8, etc.; the dots for the blue color channel may be positioned in the columns of 3, 6, 9, etc. The subpixel-geometric layout model used in the cost function may represent the geometric layout of the subpixels of the display (e.g., using a matrix of 1 and 0, with 1 representing a possible position of this color, and 0 representing a prohibited position for this color). The subpixel-geometric layout model may provide the constraints for the dot positions during the swapping process. The annealing algorithm may specify which groups of the dots should be swapped together to represent a larger subpixel (i.e., macropixel).

In particular embodiments, when generating a dot pattern for a particular grayscale value, the system may "re-use" the previously generated dot patterns for the lower grayscale values so that the newly generated dot pattern for the current grayscale value may be built upon the previous dot patterns, satisfying a spatial stacking property and a color stacking property. In other words, for a dot that is turned on for a particular grayscale value, that dot may remain being turned on for all higher grayscale values. Furthermore, for a dot that is assigned to a particular color, that dot may remain that color for all later dot patterns when the target color moves brighter along the K-W path (i.e., from black (K) to white (W)). As a result, the display system may have smoother visual effect in the dot patterns when the target color changes (e.g., no flickering effect) between different colors. In conclusion, the system can generate better dither masks by taking into account the chromatic properties of the human visual system and the geometries and layout of the display subpixels. The system may enable a better display quality with perceptually smoother and more accurate displayed images as well as improved temporal property (e.g., less flickering artifacts).

The embodiments disclosed herein are only examples, and the scope of this disclosure is not limited to them. Particular embodiments may include all, some, or none of the components, elements, features, functions, operations, or steps of the embodiments disclosed above. Embodiments according to the invention are in particular disclosed in the attached claims directed to a method, a storage medium, a system and a computer program product, wherein any feature mentioned in one claim category, e.g. method, can be claimed in another claim category, e.g. system, as well. The dependencies or references back in the attached claims are chosen for formal reasons only. However, any subject matter resulting from a deliberate reference back to any previous claims (in particular multiple dependencies) can be claimed as well, so that any combination of claims and the features thereof are disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

## BRIEF DESCRIPTION OF THE DRAWINGS

FIG. 1A illustrates an example artificial reality system.
FIG. 1B illustrates an example augmented reality system.
FIG. 1C illustrates an example architecture of a display engine.
FIG. 1D illustrates an example graphic pipeline of the display engine for generating display image data.
FIG. 2A illustrates an example scanning waveguide display.
FIG. 2B illustrates an example scanning operation of the scanning waveguide display.
FIG. 3A illustrates an example 2D micro-LED waveguide display.
FIG. 3B illustrates an example waveguide configuration for the 2D micro-LED waveguide display.
FIGs. 4A-4C illustrates three example dot patterns to represent difference grayscale levels.
FIG. 4D illustrates an example continuous tone and corresponding dithered dot patterns.

FIG. 5 illustrates an example monochrome mask.
FIG. 6 illustrates an example color dither mask.
FIGs. 7A-7C illustrate three example layouts for display subpixels.
FIGs. 8A-8B illustrate example matrixes as the subpixel geometry layout representations.
FIG. 9 illustrates an example method for displaying an image using dithering technique.
FIG. 10 illustrates an example computer system.

## DESCRIPTION OF EXAMPLE EMBODIMENTS

The number of available bits in a display may limit the display's color depth or gray scale levels. To achieve display results with higher effective grayscale level, displays may use a series of temporal subframes with less grayscale level bits to create the illusion of a target image with more grayscale level bits. The series of subframes may be generated using a segmented quantization process with each segment having a different weight. The quantization errors may be dithered spatially within each subframe. However, the subframes generated in this way may have a naive stacking property (e.g., direct stacking property without using a dither mask) and each subframe may be generated without considering what has been displayed in former subframes causing the subframes to have some artifacts that could negatively impact the experience of the viewers.

In particular embodiments, the system may use a mask-based spatio-temporal dithering method for generating each subframe of a series of subframes taking into consideration what has been displayed in the previous subframes preceding that subframe. The system may determine target pixel values of current subframe by compensating the quantization errors of the previously subframes. The pixel values of the current subframe may be determined by quantizing the target pixel values based on a dither mask having a spatial stacking property. The quantization errors may be propagated into subsequent subframes through an error buffer. The generated subframes may satisfy both spatial and temporal stacking property and provide better image display results and better user experience.

Particular embodiments of the system may provide better image quality and improve user experience for AR/VR display by using multiple subframe images with less color depth to represent an image with greater color depth. Particular embodiments of the system may generate subframe images with reduced or eliminated temporal artifacts. Particular embodiments of the system may allow AR/VR display system to reduce the space and complexity of pixel circuits by having less gray level bits, and therefore miniaturize the size of the display system. Particular embodiments of the system may make it possible for AR/VR displays to operate in monochrome mode with digital pixel circuits without using analog pixel circuits for full RGB operations.

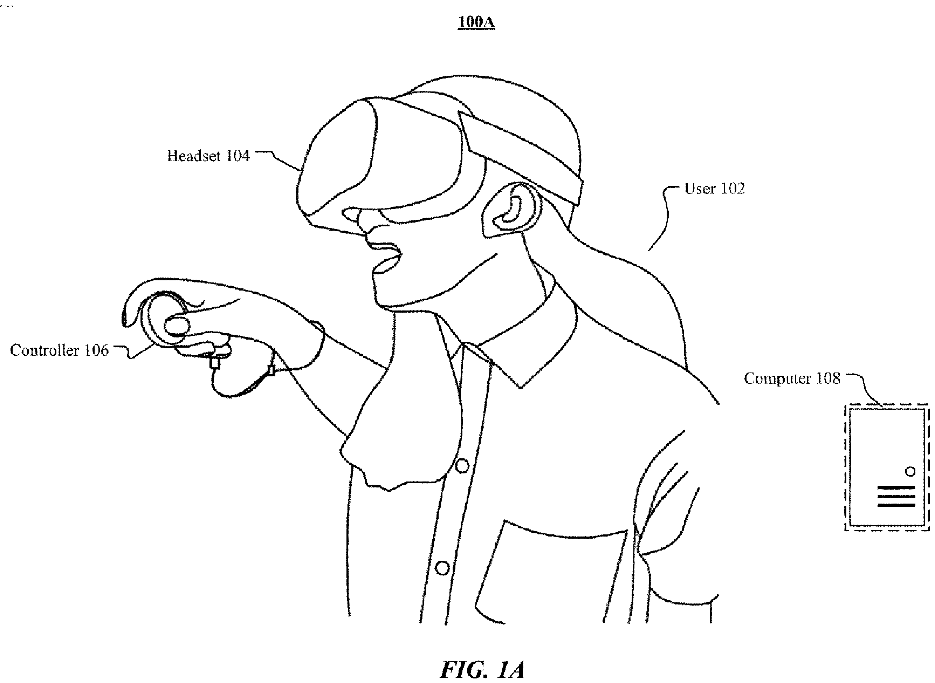

**FIG. 1A** illustrates an example artificial reality system 100A. In particular embodiments, the artificial reality system 100 may comprise a headset 104, a controller 106, and a computing system 108. A user 102 may wear the headset 104 that may display visual artificial reality content to the user 102. The headset 104 may include an audio device that may provide audio artificial reality content to the user 102. The headset 104 may include one or more cameras which can capture images and videos of environments. The headset 104 may include an eye tracking system to determine the vergence distance of the user 102. The headset 104 may be referred as a head-mounted display (HDM). The controller 106 may comprise a trackpad and one or more buttons. The controller 106 may receive inputs from the user 102 and relay the inputs to the computing system 108. The controller 206 may also provide haptic feedback to the user 102. The computing system 108 may be connected to the headset 104 and the controller 106 through cables or wireless connections. The computing system 108 may control the headset 104 and the controller 106 to provide the artificial reality content to and receive inputs from the user 102. The computing system 108 may be a standalone host computer system, an on-board computer system integrated with the headset 104, a mobile device, or any other hardware platform capable of providing artificial reality content to and receiving inputs from the user 102.

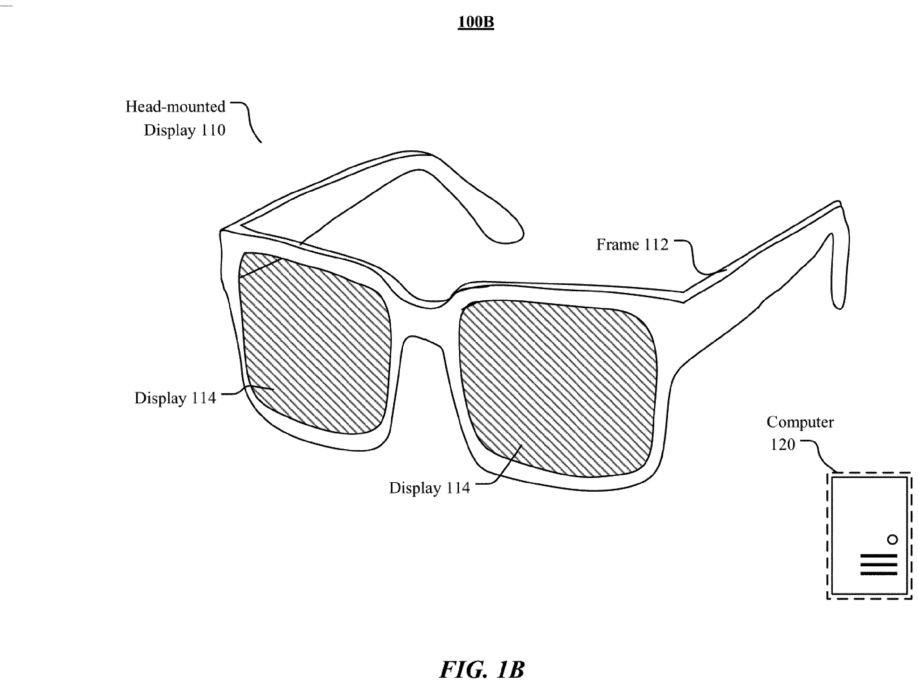

**FIG. 1B** illustrates an example augmented reality system 100B. The augmented reality system 100B may include a head-mounted display (HMD) 110 (e.g., glasses) comprising a frame 112, one or more displays 114, and a computing system 120. The displays 114 may be transparent or translucent allowing a user wearing the HMD 110 to look through the displays 114 to see the real world and displaying visual artificial reality content to the user at the same time. The HMD 110 may include an audio device that may provide audio artificial reality content to users. The HMD 110 may include one or more cameras which can capture images and videos of environments. The HMD 110 may include an eye tracking system to track the vergence movement of the user wearing the HMD 110. The augmented reality system 100B may further include a controller comprising a trackpad and one or more buttons. The controller may receive inputs from users and relay the inputs to the computing system 120. The controller may also provide haptic feedback to users. The computing system 120 may be connected to the HMD 110 and the controller through cables or wireless connections. The computing system 120 may control the HMD 110 and the controller to provide the augmented reality content to and receive inputs from users. The computing system 120 may be a standalone host computer system, an on-board computer system integrated with the HMD 110, a mobile device, or any other hardware platform capable of providing artificial reality content to and receiving inputs from users.

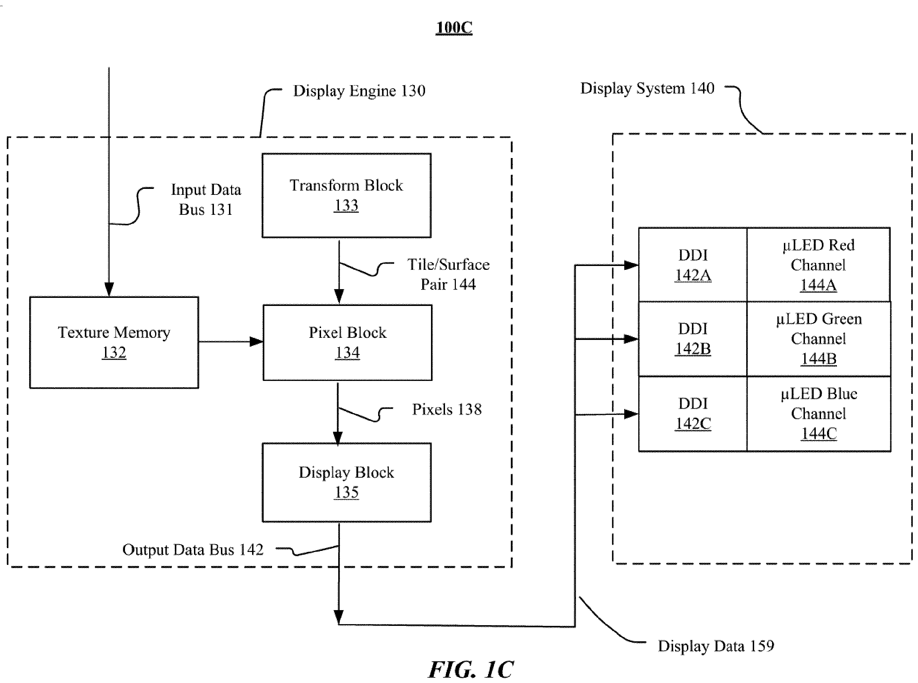

FIG. 1C illustrates an example architecture 100C of a display engine 130. In particular embodiments, the processes and methods as described in this disclosure may be embodied or implemented within a display engine 130 (e.g., in the display block 135). The display engine 130 may include, for example, but is not limited to, a texture memory 132, a transform block 133, a pixel block 134, a display block 135, input data bus 131, output data bus 142, etc. In particular embodiments, the display engine 130 may include one or more graphic pipelines for generating images to be rendered on the display. For example, the display engine may use the graphic pipeline(s) to generate a series of subframe images based on a mainframe image and a viewpoint or view angle of the user as measured by one or more eye tracking sensors. The mainframe image may be generated or/and loaded in to the system at a mainframe rate of 30-90 Hz and the subframe rate may be generated at a subframe rate of 1-2 kHz. In particular embodiments, the display engine 130 may include two graphic pipelines for the user's left and right eyes. One of the graphic pipelines may include or may be implemented on the texture memory 132, the transform block 133, the pixel block 134, the display block 135, etc. The display engine 130 may include another set of transform block, pixel block, and display block for the other graphic pipeline. The graphic pipeline(s) may be controlled by a controller or control block (not shown) of the display engine 130. In particular embodiments, the texture memory 132 may be included within the control block or may be a memory unit external to the control block but local to the display engine 130. One or more of the components of the display engine 130 may be configured to communicate via a high-speed bus, shared memory, or any other suitable methods. This communication may include transmission of data as well as control signals, interrupts or/and other instructions. For example, the texture memory 132 may be configured to receive image data through the input data bus 211. As another example, the display block 135 may send the pixel values to the display system 140 through the output data bus 142. In particular embodiments, the display system 140 may include three color channels (e.g., 114A, 114B, 114C) with respective display driver ICs (DDIs) of 142A, 142B, and 143B. In particular embodiments, the display system 140 may include, for example, but is not limited to, light-emitting diode (LED) displays, organic light-emitting diode (OLED) displays, active matrix organic light-emitting diode (AMLED) displays, liquid crystal display (LCD), micro light-emitting diode ($\mu$LED) display, electroluminescent displays (ELDs), or any suitable displays.

In particular embodiments, the display engine 130 may include a controller block (not shown). The control block may receive data and control packages such as position data and surface information from controllers external to the display engine 130 though one or more data buses. For example, the control block may receive input stream data from a body wearable computing system. The input data stream may include a series of mainframe images generated at a mainframe rate of 30-90 Hz. The input stream data including the mainframe images may be converted to the required format and stored into the texture memory 132. In particular embodiments, the control block may receive input from the body wearable computing system and initialize the graphic pipelines in the display engine to prepare and finalize the image data for rendering on the display. The data and control packets may include information related to, for example, one or more surfaces including texel data, position data, and additional rendering instructions. The control block may distribute data as needed to one or more other blocks of the display engine 130. The control block may initiate the graphic pipelines for processing one or more frames to be displayed. In particular embodiments, the graphic pipelines for the two eye display systems may each include a control block or share the same control block.

In particular embodiments, the transform block 133 may determine initial visibility information for surfaces to be displayed in the artificial reality scene. In general, the transform block 133 may cast rays from pixel locations on the screen and produce filter commands (e.g., filtering based on bilinear or other types of interpolation techniques) to send to the pixel block 134. The transform block 133 may perform ray casting from the current viewpoint of the user (e.g., determined using the headset's inertial measurement units, eye tracking sensors, and/or any suitable tracking/localization algorithms, such as simultaneous localization and mapping (SLAM)) into the artificial scene where surfaces are positioned and may produce tile/surface pairs 144 to send to the pixel block 134. In particular embodiments, the transform block 133 may include a four-stage pipeline as follows. A ray caster may issue ray bundles corresponding to arrays of one or more aligned pixels, referred to as tiles (e.g., each tile may include $16 \times 16$ aligned pixels). The ray bundles may be warped, before entering the artificial reality scene, according to one or more distortion meshes. The distortion meshes may be configured to correct geometric distortion effects stemming from, at least, the eye display systems the headset system. The transform block 133 may determine whether each ray bundle intersects with surfaces in the scene by comparing a bounding box of each tile to bounding boxes for the surfaces. If a ray bundle does not intersect with an object, it may be discarded. After the tile-surface intersections are detected, the corresponding tile/surface pairs may be passed to the pixel block 134.

In particular embodiments, the pixel block 134 may determine color values or grayscale values for the pixels based on the tile-surface pairs. The color values for each pixel may be sampled from the texel data of surfaces received and stored in texture memory 132. The pixel block 134 may receive tile-surface pairs from the transform block 133 and may schedule bilinear filtering using one or more filer blocks. For each tile-surface pair, the pixel block 134 may sample color information for the pixels within the tile using color values corresponding to where the projected tile intersects the surface. The pixel block 134 may determine pixel values based on the retrieved texels (e.g., using bilinear interpolation). In particular embodiments, the pixel block 134 may process the red, green, and blue color components separately for each pixel. In particular embodiments, the display may include two pixel blocks for the two eye display systems. The two pixel blocks of the two eye display systems may work independently and in parallel with each other. The pixel block 134 may then output its color determinations (e.g., pixels 138) to the display block 135. In particular embodiments, the pixel block 134 may composite two or more surfaces into one surface to when the two or more surfaces have overlapping areas. A composed surface may need less computational resources (e.g., computational units, memory, power, etc.) for the resampling process.

In particular embodiments, the display block 135 may receive pixel color values from the pixel block 134, covert the format of the data to be more suitable for the scanline output of the display, apply one or more brightness corrections to the pixel color values, and prepare the pixel color values for output to the display. In particular embodiments, the display block 135 may each include a row buffer and may process and store the pixel data received from the pixel block 134. The pixel data may be organized in quads (e.g., 2×2 pixels per quad) and tiles (e.g., 16×16 pixels per tile). The display block 135 may convert tile-order pixel color values generated by the pixel block 134 into scanline or row-order data, which may be required by the physical displays. The brightness corrections may include any required brightness correction, gamma mapping, and dithering. The display block 135 may output the corrected pixel color values directly to the driver of the physical display (e.g., pupil display) or may output the pixel values to a block external to the display engine 130 in a variety of formats. For example, the eye display systems of the headset system may include additional hardware or software to further customize backend color processing, to support a wider interface to the display, or to optimize display speed or fidelity.

In particular embodiments, the dithering methods and processes (e.g., spatial dithering method, temporal dithering methods, and spatio-temporal methods) as described in this disclosure may be embodied or implemented in the display block 135 of the display engine 130. In particular embodiments, the display block 135 may include a model-based dithering algorithm or a dithering model for each color channel and send the dithered results of the respective color channels to the respective display driver ICs (e.g., 142A, 142B, 142C) of display system 140. In particular embodiments, before sending the pixel values to the respective display driver ICs (e.g., 142A, 142B, 142C), the display block 135 may further include one or more algorithms for correcting, for example, pixel non-uniformity, LED non-ideality, waveguide non-uniformity, display defects (e.g., dead pixels), etc.

In particular embodiments, graphics applications (e.g., games, maps, content-providing apps, etc.) may build a scene graph, which is used together with a given view position and point in time to generate primitives to render on a GPU or display engine. The scene graph may define the logical and/or spatial relationship between objects in the scene. In particular embodiments, the display engine 130 may also generate and store a scene graph that is a simplified form of the full application scene graph. The simplified scene graph may be used to specify the logical and/or spatial relationships between surfaces (e.g., the primitives rendered by the display engine 130, such as quadrilaterals or contours, defined in 3D space, that have corresponding textures generated based on the mainframe rendered by the application). Storing a scene graph allows the display engine 130 to render the scene to multiple display frames and to adjust each element in the scene graph for the current viewpoint (e.g., head position), the current object positions (e.g., they could be moving relative to each other) and other factors that change per display frame. In addition, based on the scene graph, the display engine 130 may also adjust for the geometric and color distortion introduced by the display subsystem and then composite the objects together to generate a frame. Storing a scene graph allows the display engine 130 to approximate the result of doing a full render at the desired high frame rate, while actually running the GPU or display engine 130 at a significantly lower rate.

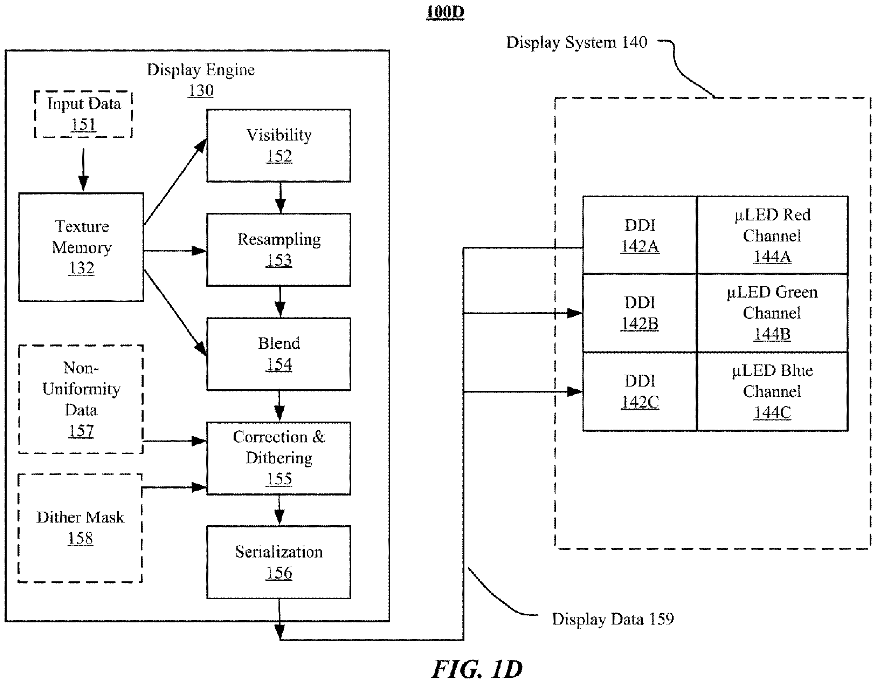

**FIG. 1D** illustrates an example graphic pipeline 100D of the display engine 130 for generating display image data. In particular embodiments, the graphic pipeline 100D may include a visibility step 152, where the display engine 130 may determine the visibility of one or more surfaces received from the body wearable computing system. The visibility step 152 may be performed by the transform block (e.g., 2133 in FIG. 1C) of the display engine 130. The display engine 130 may receive (e.g., by a control block or a controller) input data 151 from the body-wearable computing system. The input data 151 may include one or more surfaces, texel data, position data, RGB data, and rendering instructions from the body wearable computing system. The input data 151 may include mainframe images with 30-90 frames per second (FPS). The main frame image may have color depth of, for example, 24 bits per pixel. The display engine 130 may process and save the received input data 151 in the texel memory 132. The received data may be passed to the transform block 133 which may determine the visibility information for surfaces to be displayed. The transform block 133 may cast rays for pixel locations on the screen and produce filter commands (e.g., filtering based on bilinear or other types of interpolation techniques) to send to the pixel block 134. The transform block 133 may perform ray casting from the current viewpoint of the user (e.g., determined using the headset's inertial measurement units, eye trackers, and/or any suitable tracking/localization algorithms, such as simultaneous localization and mapping (SLAM)) into the artificial scene where surfaces are positioned and produce surface-tile pairs to send to the pixel block 134.

In particular embodiments, the graphic pipeline 100D may include a resampling step 153, where the display engine 130 may determine the color values from the tile-surfaces pairs to produce pixel color values. The resampling step 153 may be performed by the pixel block 134 in FIG. 1C) of the display engine 130. The pixel block 134 may receive tile-surface pairs from the transform block 133 and may schedule bilinear filtering. For each tile-surface pair, the pixel block 134 may sample color information for the pixels within the tile using color values corresponding to where the projected tile intersects the surface. The pixel block 134 may determine pixel values based on the retrieved texels (e.g., using bilinear interpolation) and output the determined pixel values to the respective display block 135.

In particular embodiments, the graphic pipeline 100D may include a bend step 154, a correction and dithering step 155, a serialization step 156, etc. In particular embodiments, the bend step, correction and dithering step, and serialization steps of 154, 155, and 156 may be performed by the display block (e.g., 135 in FIG. 1C) of the display engine 130. The correction and dithering step 155 may be based on the non-uniformity data 157 and dither mask 158. The display engine 130 may blend the display content for display content rendering, apply one or more brightness corrections to the pixel color values, perform one or more dithering algorithms for dithering the quantization errors both spatially and temporally, serialize the pixel values for scanline output for the physical display, and generate the display data 159 suitable for the display system 140. The display engine 130 may send the display data 159 to the display system 140. In particular embodiments, the display system 140 may include three display driver ICs (e.g., 142A, 142B, 142C) for the pixels of the three color channels of RGB (e.g., 144A, 144B, 144C).

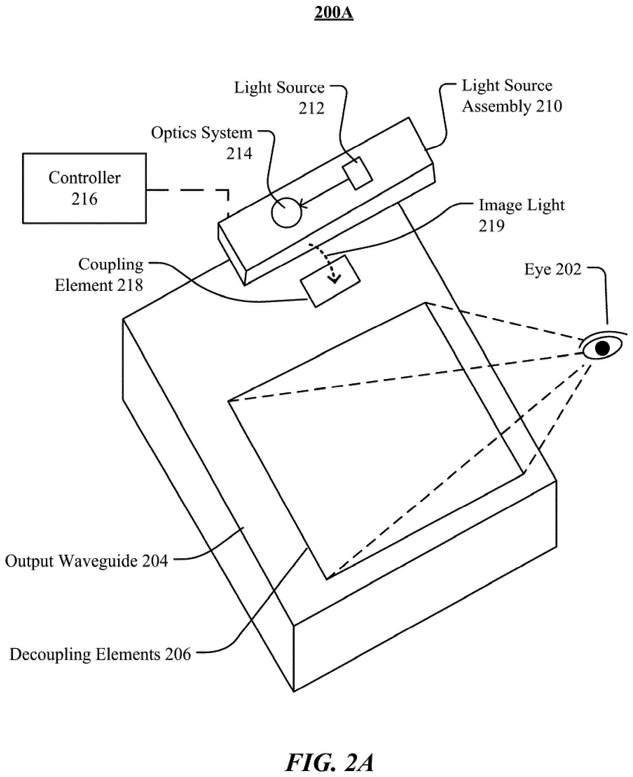

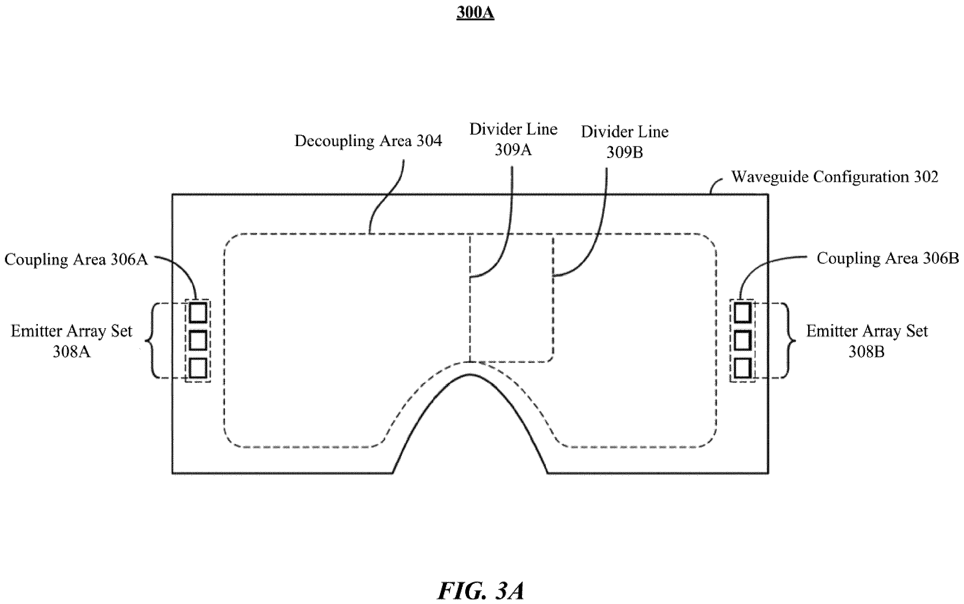

**FIG. 2A** illustrates an example scanning waveguide display 200A. In particular embodiments, the head-mounted display (HMD) of the AR/VR system may include a near eye display (NED) which may be a scanning waveguide display 200A. The scanning waveguide display 200A may include a light source assembly 210, an output waveguide 204, a controller 216, etc. The scanning waveguide display 200A may provide images for both eyes or for a single eye. For purposes of illustration, FIG. 3A shows the scanning waveguide display 200A associated with a single eye 202. Another scanning waveguide display (not shown) may provide image light to the other eye of the user and the two scanning waveguide displays may share one or more components or may be separated. The light source assembly 210 may include a light source 212 and an optics system 214. The light source 212 may include an optical component that could generate image light using an array of light emitters. The light source 212 may generate image light including, for example, but not limited to, red image light, blue image light, green image light, infra-red image light, etc. The optics system 214 may perform a number of optical processes or operations on the image light generated by the light source 212. The optical processes or operations performed by the optics systems 214 may include, for example, but are not limited to, light focusing, light combining, light conditioning, scanning, etc.

In particular embodiments, the optics system 214 may include a light combining assembly, a light conditioning assembly, a scanning mirror assembly, etc. The light source assembly 210 may generate and output an image light 219 to a coupling element 218 of the output waveguide 204. The output waveguide 204 may be an optical waveguide that could output image light to the user eye 202. The output waveguide 204 may receive the image light 219 at one or more coupling elements 218 and guide the received image light to one or more decoupling elements 206. The coupling element 218 may be, for example, but is not limited to, a diffraction grating, a holographic grating, any other suitable elements that can couple the image light 219 into the output waveguide 204, or a combination thereof. As an example and not by way of limitation, if the coupling element 350 is a diffraction grating, the pitch of the diffraction grating may be chosen to allow the total internal reflection to occur and the image light 219 to propagate internally toward the decoupling element 206. The pitch of the diffraction grating may be in the range of 300 nm to 600 nm. The decoupling element 206 may decouple the total internally reflected image light from the output waveguide 204. The decoupling element 206 may be, for example, but is not limited to, a diffraction grating, a holographic grating, any other suitable element that can decouple image light out of the output waveguide 204, or a combination thereof. As an example and not by way of limitation, if the decoupling element 206 is a diffraction grating, the pitch of the diffraction grating may be chosen to cause incident image light to exit the output waveguide 204. The orientation and position of the image light exiting from the output waveguide 204 may be controlled by changing the orientation and position of the image light 219 entering the coupling element 218. The pitch of the diffraction grating may be in the range of 300 nm to 600 nm.

In particular embodiments, the output waveguide 204 may be composed of one or more materials that can facilitate total internal reflection of the image light 219. The output waveguide 204 may be composed of one or more materials including, for example, but not limited to, silicon, plastic, glass, polymers, or some combination thereof. The output waveguide 204 may have a relatively small form factor. As an example and not by way of limitation, the output waveguide 204 may be approximately 50 mm wide along X-dimension, 30 mm long along Y-dimension and 0.5-1 mm thick along Z-dimension. The controller 216 may control the scanning operations of the light source assembly 210. The controller 216 may determine scanning instructions for the light source assembly 210 based at least on the one or more display instructions for rendering one or more images. The display instructions may include an image file (e.g., bitmap) and may be received from, for example, a console or computer of the AR/VR system. Scanning instructions may be used by the light source assembly 210 to generate image light 219. The scanning instructions may include, for example, but are not limited to, an image light source type (e.g., monochromatic source, polychromatic source), a scanning rate, a scanning apparatus orientation, one or more illumination parameters, or some combination thereof. The controller 216 may include a combination of hardware, software, firmware, or any suitable components supporting the functionality of the controller 216.

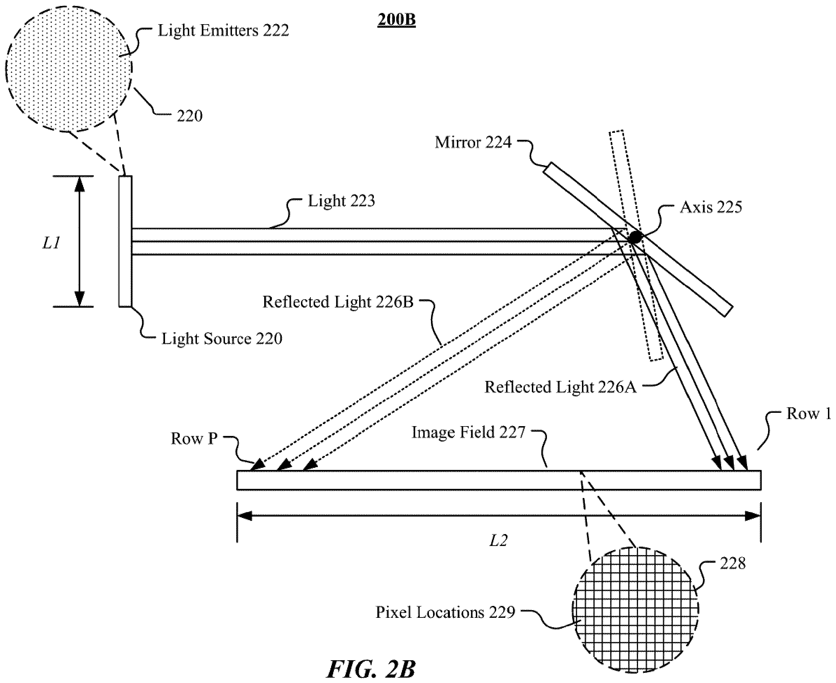

**FIG. 2B** illustrates an example scanning operation of a scanning waveguide display 200B. The light source 220 may include an array of light emitters 222 (as represented by the dots in inset) with multiple rows and columns. The light 223 emitted by the light source 220 may include a set of collimated beams of light emitted by each column of light emitters 222. Before reaching the mirror 224, the light 223 may be conditioned by different optical devices such as the conditioning assembly (not shown). The mirror 224 may reflect and project the light 223 from the light source 220 to the image field 227 by rotating about an axis 225 during scanning operations. The mirror 224 may be a microelectromechanical system (MEMS) mirror or any other suitable mirror. As the mirror 224 rotates about the axis 225, the light 223 may be projected to a different part of the image field 227, as illustrated by the reflected part of the light 226A in solid lines and the reflected part of the light 226B in dash lines.

In particular embodiments, the image field 227 may receive the light 226A-B as the mirror 224 rotates about the axis 225 to project the light 226A-B in different directions. For example, the image field 227 may correspond to a portion of the coupling element 218 or a portion of the decoupling element 206 in FIG. 2A. In particular embodiments, the image field 227 may include a surface of the coupling element 206. The image formed on the image field 227 may be magnified as light travels through the output waveguide 220. In particular embodiments, the image field 227 may not include an actual physical structure but include an area to which the image light is projected to form the images. The image field 227 may also be referred to as a scan field. When the light 223 is projected to an area of the image field 227, the area of the image field 227 may be illuminated by the light 223. The image field 227 may include a matrix of pixel locations 229 (represented by the blocks in inset 228) with multiple rows and columns. The pixel location 229 may be spatially defined in the area of the image field 227 with a pixel location corresponding to a single pixel. In particular embodiments, the pixel locations 229 (or the pixels) in the image field 227 may not include individual physical pixel elements. Instead, the pixel locations 229 may be spatial areas that are defined within the image field 227 and divide the image field 227 into pixels. The sizes and locations of the pixel locations 229 may depend on the projection of the light 223 from the light source 220. For example, at a given rotation angle of the mirror 224, light beams emitted from the light source 220 may fall on an area of the image field 227. As such, the sizes and locations of pixel locations 229 of the image field 227 may be defined based on the location of each projected light beam. In particular embodiments, a pixel location 229 may be subdivided spatially into subpixels (not shown). For example, a pixel location 229 may include a red subpixel, a green subpixel, and a blue subpixel. The red, green and blue subpixels may correspond to respective locations at which one or more red, green and blue light beams are projected. In this case, the color of a pixel may be based on the temporal and/or spatial average of the pixel's subpixels.

In particular embodiments, the light emitters 222 may illuminate a portion of the image field 227 (e.g., a particular subset of multiple pixel locations 229 on the image field 227) with a particular rotation angle of the mirror 224. In particular embodiment, the light emitters 222 may be arranged and spaced such that a light beam from each of the light emitters 222 is projected on a corresponding pixel location 229. In particular embodiments, the light emitters 222 may include a number of light-emitting elements (e.g., micro-LEDs) to allow the light beams from a subset of the light emitters 222 to be projected to a same pixel location 229. In other words, a subset of multiple light emitters 222 may collectively illuminate a single pixel location 229 at a time. As an example and not by way of limitation, a group of light emitter including eight light-emitting elements may be arranged in a line to illuminate a single pixel location 229 with the mirror 224 at a given orientation angle.

In particular embodiments, the number of rows and columns of light emitters 222 of the light source 220 may or may not be the same as the number of rows and columns of the pixel locations 229 in the image field 227. In particular embodiments, the number of light emitters 222 in a row may be equal to the number of pixel locations 229 in a row of the image field 227 while the light emitters 222 may have fewer columns than the number of pixel locations 229 of the image field 227. In particular embodiments, the light source 220 may have the same number of columns of light emitters 222 as the number of columns of pixel locations 229 in the image field 227 but fewer rows. As an example and not by way of limitation, the light source 220 may have about 1280 columns of light emitters 222 which may be the same as the number of columns of pixel locations 229 of the image field 227, but only a handful rows of light emitters 222. The light source 220 may have a first length $L1$ measured from the first row to the last row of light emitters 222. The image field 530 may have a second length $L2$, measured from the first row (e.g., Row 1) to the last row (e.g., Row P) of the image field 227. The $L2$ may be greater than $L1$ (e.g., $L2$ is 50 to 10,000 times greater than $L1$).

In particular embodiments, the number of rows of pixel locations 229 may be larger than the number of rows of light emitters 222. The display device 200B may use the mirror 224 to project the light 223 to different rows of pixels at different time. As the mirror 520 rotates and the light 223 scans through the image field 227, an image may be formed on the image field 227. In some embodiments, the light source 220 may also has a smaller number of columns than the image field 227. The mirror 224 may rotate in two dimensions to fill the image field 227 with light, for example, using a raster-type scanning process to scan down the rows then moving to new columns in the image field 227. A complete cycle of rotation of the mirror 224 may be referred to as a scanning period which may be a predetermined cycle time during which the entire image field 227 is completely scanned. The scanning of the image field 227 may be determined and controlled by the mirror 224 with the light generation of the display device 200B being synchronized with the rotation of the mirror 224. As an example and not by way of limitation, the mirror 224 may start at an initial position projecting light to Row 1 of the image field 227, and rotate to the last position that projects light to Row P of the image field 227, and then rotate back to the initial position during one scanning period. An image (e.g., a frame) may be formed on the image field 227 per scanning period. The frame rate of the display device 200B may correspond to the number of scanning periods in a second. As the mirror 224 rotates, the light may scan through the image field to form images. The actual color value and light intensity or brightness of a given pixel location 229 may be a temporal sum of the color various light beams illuminating the pixel location during the scanning period. After completing a scanning period, the mirror 224 may revert back to the initial position to project light to the first few rows of the image field 227 with a new set of driving signals being fed to the light emitters 222. The same process may be repeated as the mirror 224 rotates in cycles to allow different frames of images to be formed in the scanning field 227.

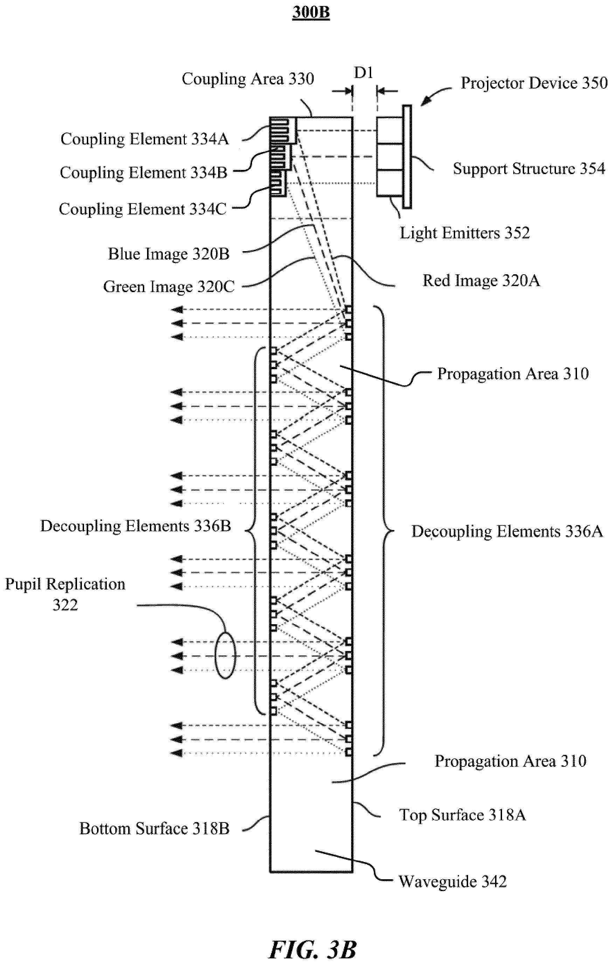

FIG. 3A illustrates an example 2D micro-LED waveguide display 300A. In particular embodiments, the display 300A may include an elongate waveguide configuration 302 that may be wide or long enough to project images to both eyes of a user. The waveguide configuration 302 may include a decoupling area 304 covering both eyes of the user. In order to provide images to both eyes of the user through the waveguide configuration 302, multiple coupling areas 306A-B may be provided in a top surface of the waveguide configuration 302. The coupling areas 306A and 306B may include multiple coupling elements to receive image light from light emitter array sets 308A and 308B, respectively. Each of the emitter array sets 308A-B may include a number of monochromatic emitter arrays including, for example, but not limited to, a red emitter array, a green emitter array, and a blue emitter array. In particular embodiments, the emitter array sets 308A-B may further include a white emitter array or an emitter array emitting other colors or any combination of any multiple colors. In particular embodiments, the waveguide configuration 302 may have the emitter array sets 308A and 308B covering approximately identical portions of the decoupling area 304 as divided by the divider line 309A. In particular embodiments, the emitter array sets 308A and 308B may provide images to the waveguide of the waveguide configuration 302 asymmetrically as divided by the divider line 309B. For example, the emitter array set 308A may provide image to more than half of the decoupling area 304. In particular embodiments, the emitter array sets 308A and 308B may be arranged at opposite sides (e.g., 180° apart) of the waveguide configuration 302 as shown in FIG. 3B. In other embodiments, the emitter array sets 308A and 308B may be arranged at any suitable angles. The waveguide configuration 302 may be planar or may have a curved cross-sectional shape to better fit to the face/head of a user.

FIG. 3B illustrates an example waveguide configuration 300B for the 2D micro-LED waveguide display. In particular embodiments, the waveguide configuration 300B may include a projector device 350 coupled to a waveguide 342. The projector device 320 may include a number of light emitters 352 (e.g., monochromatic emitters) secured to a support structure 354 (e.g., a printed circuit board or other suitable support structure). The waveguide 342 may be separated from the projector device 350 by an air gap having a distance of $D1$ (e.g., approximately 50 $\mu$m to approximately 500 $\mu$m). The monochromatic images projected by the projector device 350 may pass through the air gap toward the waveguide 342. The waveguide 342 may be formed from a glass or plastic material. The waveguide 342 may include a coupling area 330 including a number of coupling elements 334A-C for receiving the emitted light from the projector device 350. The waveguide 342 may include a decoupling area with a number of decoupling elements 336A on the top surface 318A and a number of decoupling elements 336B on the bottom surface 318B. The area within the waveguide 342 in between the decoupling elements 336A and 336B may be referred as a propagation area 310, in which image light received from the projector device 350 and coupled into the waveguide 342 by the coupling element 334 may propagate laterally within the waveguide 342.

The coupling area 330 may include coupling elements (e.g., 334A, 334B, 334C) configured and dimensioned to couple light of predetermined wavelengths (e.g., red, green, blue). When a white light emitter array is included in the projector device 350, the portion of the white light that falls in the predetermined wavelengths may be coupled by each of the coupling elements 334A-C. In particular embodiments, the coupling elements 334A-B may be gratings (e.g., Bragg gratings) dimensioned to couple a predetermined wavelength of light. In particular embodiments, the gratings of each coupling element may exhibit a separation distance between gratings associated with the predetermined wavelength of light and each coupling element may have different grating separation distances. Accordingly, each coupling element (e.g., 334A-C) may couple a limited portion of the white light from the white light emitter array of the projector device 350 if white light emitter array is included in the projector device 350. In particular embodiments, each coupling element (e.g., 334A-C) may have the same grating separation distance. In particular embodiments, the coupling elements 334A-C may be or include a multiplexed coupler.

As illustrated in FIG. 3B, a red image 320A, a blue image 320B, and a green image 320C may be coupled by the coupling elements 334A, 334B, 334C, respectively, into the propagation area 310 and may begin to traverse laterally within the waveguide 342. A portion of the light may be projected out of the waveguide 342 after the light contacts the decoupling element 336A for one-dimensional pupil replication, and after the light contacts both the decoupling elements 336A and 336B for two-dimensional pupil replication. In two-dimensional pupil replication, the light may be projected out of the waveguide 342 at locations where the pattern of the decoupling element 336A intersects the pattern of the decoupling element 336B. The portion of the light that is not projected out of the waveguide 342 by the decoupling element 336A may be reflected off the decoupling element 336B. The decoupling element 336B may reflect all incident light back toward the decoupling element 336A. Accordingly, the waveguide 342 may combine the red image 320A, the blue image 320B, and the green image 320C into a polychromatic image instance which may be referred as a pupil replication 322. The polychromatic pupil replication 322 may be projected to the user's eyes which may interpret the pupil replication 322 as a full color image (e.g., an image including colors addition to red, green, and blue). The waveguide 342 may produce tens or hundreds of pupil replication 322 or may produce a single replication 322.

In particular embodiments, the AR/VR system may use scanning waveguide displays or 2D micro-LED displays for displaying AR/VR content to users. In order to miniaturize the AR/VR system, the display system may need to miniaturize the space for pixel circuits and may have limited number of available bits for the display. The number of available bits in a display may limit the display's color depth or gray scale level, and consequently limit the quality of the displayed images. Furthermore, the waveguide displays used for AR/VR systems may have nonuniformity problem cross all display pixels. The compensation operations for pixel nonuniformity may result in loss on image grayscale and further reduce the quality of the displayed images. For example, a waveguide display with 8-bit pixels (i.e., 256 gray level) may equivalently have 6-bit pixels (i.e., 64 gray level) after compensation of the nonuniformity (e.g., 8:1 waveguide nonuniformity, 0.1% dead micro-LED pixel, and 20% micro-LED intensity nonuniformity).

To improve the displayed image quality, displays with limited color depth or gray scale level may use spatio dithering to spread quantization errors to neighboring pixels and generate the illusion of increased color depth or gray scale level. To further increase the color depth or gray scale level, displays may generate a series of temporal subframe images with less gray level bits to give the illusion of a target image which has more gray level bits. Each subframe image may be dithered using spatio dithering techniques within that subframe image. The temporal average or aggregation of the series of subframe image may correspond to the image as perceived by the viewer. For example, for display an image with 8-bit pixels (i.e., 256 gray levels), the system may use four subframe images each having 6-bit pixels (i.e., 64 gray level) to represent the 8-bit target image. As another example, an image with 8-bit pixels (i.e., 256 gray levels) may be represented by 16 subframe images each having 4-bit pixels (i.e., 16 gray levels). This would allow the display system to render images of more gray level (e.g., 8-bit pixels) with pixel circuits and supporting hardware for less gray levels (e.g., 6-bit pixels or 4-bit pixels), and therefore reduce the space and size of the display system.

In some situations, the images to be displayed may have pixels with more bits per color than the display hardware on which the images need to be displayed. For example, the images to be displayed may support 13 bits per color, but the display may only support 6 bits per color. Dithering technique may be used for improving the perceived quality of images with limited bit depth. Traditional dither masks may be designed to be monochrome with the same dither mask being applied to all three-color channels. Furthermore, the traditional method of generating the dither mask does not consider the chromatic channels of the human visual system, which has different sensitivities in different chromatic channels and spatial frequency ranges. Traditional dithering technique also does not consider the subpixel geometry layout of the display. As a result, the displayed images may have less optimal spatial display quality (e.g., more perceptual dither noise). Finally, traditional dithering technique does not consider spatial or color stacking property, and hence may be susceptible to temporal artifacts (e.g., flickering).

To solve these problems, particular embodiments in this disclosure may use dither masks to generate output images with lower color bits to represent the target image with higher color bits. The dither mask may be generated by taking into consideration of (1) the chromatic channels of the human visual system (HVS) and (2) the subpixel-geometry layout of the display. The system may generate a dither mask for each of the RGB color channels. To determine these dot patterns for each mask, the system may first generate a random dot pattern with the given number of dots. Then, the system may swap one dot or one group of dots together (depending on the subpixel geometric layout) of a particular color channel to a different position, and calculate a perceptual error using a pre-determined cost function. The cost function may include the model for the human visual system (HVS) and the subpixel-geometric layout model. The cost function may iterate through all RGB color channels and all available dots to determine an estimated perceptual error value for the current dot patterns with respect to the target grayscale level. The system may track the estimated perceptual error values and compare with those calculated in previous steps. The system may keep the swapped dot position(s), if the error value becomes smaller, and may discard the swapped dot position(s), if the error value become larger. During the swapping process, the subpixel-geometric layout of the display may be used to as constraints for determining where the dots can be positioned during the annealing process. The system may repeat this process until the process converges and the generated dot pattern provides a minimize perceptual error value. The generated dither masks may satisfy a spatial stacking property and a color staking property.

By taking into consideration of the human visual system properties (e.g., different sensitivities over different chromatic channels and spatial frequency ranges) and the subpixel geometry layout (e.g., sizes, shapes, arrangements, etc.) in generating the dither mask, particular embodiments of the system may generate better dither masks which have smoother visual effect in the dot patterns both spatially (e.g., less perceptual dither noise) and temporally ( e.g., reduced flickering risks when the target color changes from one color to another). By using these improved dither masks, the system may achieve a better display quality by having perceptually smoother and more accurate displayed images, as well as less flickering artifacts.

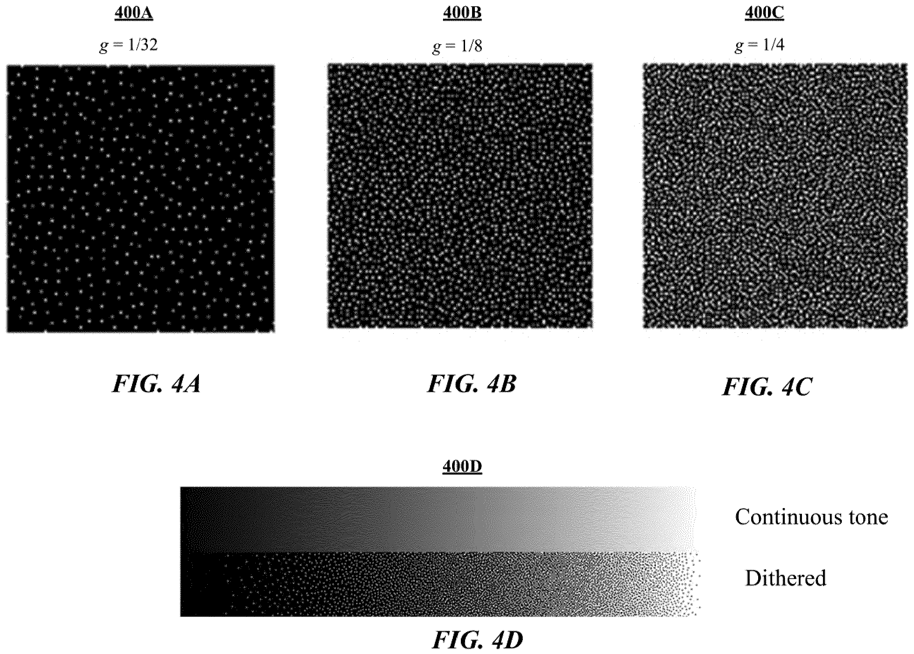

**FIGs. 4A-4C** illustrates three example dot patterns (400A, 400B, and 400C) to represent difference grayscale levels. **FIG. 4D** illustrates an example continuous tone and corresponding dithered dot patterns 400D. Dithering may be a way of presenting a grayscale level with a spatial average of dot patterns. Dithering technique may play an important role in the display of the AR/VR systems, particularly when the system needs to represent higher bit depth data with lower bit depth pixel values (e.g., the pixel values of images may have 13 bit precision but the display hardware may only have 6 bits). The dithering technique may rely on the principle that the human visual system (HVS) may, under the correct circumstances and by virtue of its spatial integration property, interpret dot patterns with a given density as a grayscale. As such, the system may use a dot pattern with a particular dot density to represent a target grayscale level, for example, an average grayscale level in a target area corresponding to a mask size. As shown in FIG. 4D, when viewed with a high enough angular resolution, spatial integration over the monochrome dot patterns may appear as successively increasing grayscale levels $0 \leq g \leq 1$. For example, the three dot patterns as shown in FIGs. 4A-4C may be used to represent the grayscale levels of 1/32, 1/8, and 1/4, respectively. In particular embodiments, an AR/VR system may use a simple color dithering method which uses a monochrome dither mask to provide improved image quality with no additional computational complexity. In particular embodiments, the system may use a more complex design with uses of full-color dither masks to significantly improve image quality for arbitrary subpixel geometries, as described in later section of this disclosure.

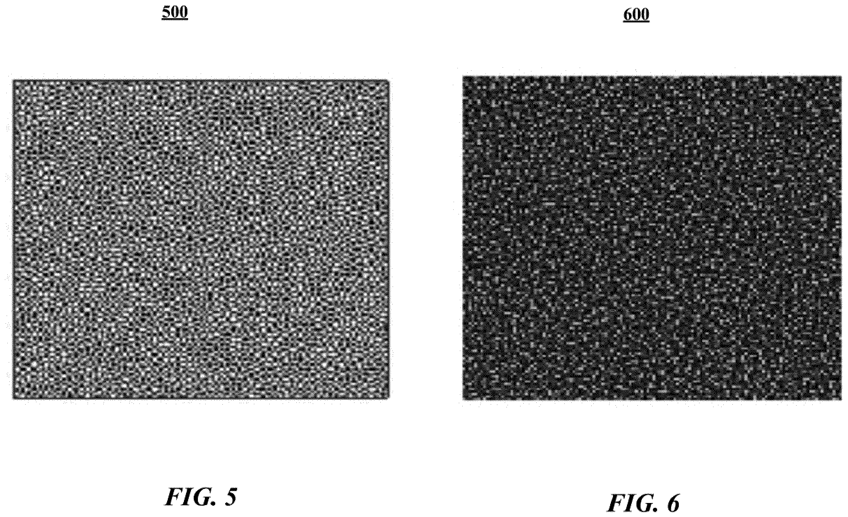

**FIG. 5** illustrates an example monochrome mask 500. In particular embodiments, the system may generate a monochrome dither mask which includes a number of dot patterns that are stacked together. The mask may include a number of spatially stacked dot patterns each corresponding to a particular grayscale level within a target grayscale level range. The dot patterns in the mask may have a spatial stacking property so that the dot pattern of each grayscale level may include all the dot patterns corresponding to all lower grayscale levels. Each dot in the dither mask may be associated with a threshold value. The threshold value may correspond to the smallest grayscale value associated with a dot pattern that includes that dot. During the running stage, the system may compare (e.g., using Equation 1 shown as below) a target grayscale value to the threshold value associated with a dot to determine whether that dot should be "turned on" (i.e., included) in this dot pattern to represent the target grayscale value. By comparing the target grayscale values to the threshold values associated with the dots in the mask, the system may reproduce the dot patterns to effectively represent the target grayscale values.

$$p'_{x,y} = \begin{cases} 1 & if \ p_{x,y} \ \geq \ M_{x,y} \\ 0 & otherwise \end{cases} \qquad (1)$$

where, $p_{x,y}$ is the target pixel value for the (x, y) position, $M_{x,y}$ is the threshold value for the dot at the (x, y) position, 1 represents that this dot should be "turned on" and thus will be included in the dot pattern for representing the target pixel value, 0 represents that this dot should not be turned on and thus will not be included in the dot pattern for representing the target pixel value. In particular embodiments, this process may be referred to as "mask-based dithering," and it may have several advantages. Firstly, the dot patterns may be static and thus the method can avoid the moving dither artifacts which plague error-propagation techniques such as the Floyd-Steinberg algorithm. Second, mask-based techniques may be extremely efficient to implement and may not require line buffers (thus less memory usage). The mask design and generation process may be performed offline and may use only a very small amount of memory. Thirdly, the dot patterns may be tailored to human perception and the subpixel geometry layout of the display, which may further improve the quality of the displayed images.

In particular embodiments, the dot patterns (D) for each grayscale (g) may be generated according to two criteria. First, the dots patterns may satisfy a spatial dot distribution characteristic having blue noise properties. Second, the dot patterns may obey the "stacking property" according to which a dot pattern corresponding to a grayscale level may include all dot patterns corresponding to all lower grayscale levels. Designing the dither masks (thresholds) may involve generating the dot patterns D for each grayscale level g. The dot density should match the target desired grayscale g. By taking the HVS function h into account, the dot patterns of the dither masks may have a "blue-noise" property (e.g., perceptually uniform). Building a perceptually optimal dither mask may be treated as an optimization problem where the cost function/perceptual error (e) is to be minimized and the dot density of the dot pattern is matched the corresponding target grayscale value. Given a lowpass human visual system (HVS) luminance function (h), the system may generate the sets of dot patterns to minimize the perceptual error using the cost function as shown below.

$$e = \sum_{all \ dots} (D * h - g)^2 \qquad (2)$$

where, D represents the dot patterns that is being optimized, g represents target grayscale values, h represents the human visual system model (e.g., luminance function), e represents the estimated perceptual error for the dot pattern.

In particular embodiments, the system may use a simulated annealing optimization approach to determine the dot patterns for the dither mask. To determine the dot patterns, the system may first generate the dot patterns for the grayscale levels of 25%, 50%, and 75% (normalized) and then use these dot patterns as constraints to determine the dot patterns for the remaining grayscale levels. The dot pattern for 75% may include all the dots for 50%, which may further include all the dots for 25%. The system may first determine the number of dots (e.g., 50%) for the dot pattern of a particular grayscale level, and then determine the dot distribution using a simulated annealing process. For example, for 50%, the system may use the dot pattern for 25% as the initial dot pattern. Then, the system may allocate additional 25% dots that are non-fixed in positions. Such additional dots may be randomly selected from the remaining non-fixed dots. Then, the system may swap one dot or one group of dots (depending on the subpixel geometric layout) of a particular color channel to a different position(s), and calculate a perceptual error using a pre-determined cost function. The dots or dot groups may be swapped in pair and the pair of dots or pair of groups may be randomly selected in each optimization step. The system may track the estimated perceptual error values and compare with those calculated in previous steps. The system may keep the swapped dot position(s), if the perceptual error value becomes smaller, and may discard the swapped dot position(s), if the perceptual error value become greater. The system may repeat this process until the process converges and the generated dot pattern provides a minimize perceptual error value. The system may repeat this process to minimize the estimated perceptual error value as determined by the cost function to generate the optimized dither mask(s).

By using a lowpass human visual system luminance function ($h$), the resulting dot patterns may have a blue noise bandpass characteristic, which could be perceptually uniform and thus pleasing to the human visual system. The stacking property, on the other hand, may stipulate that the dot pattern for a grayscale $g_n$ contains the dot pattern for the previous grayscale $g_{n-1}$. This spatial stacking property may allow a minimum number of dot changes between grayscales, delivering perceptually smooth transitions. It may also allow the patterns to be collected into a single dither mask as shown in FIG. 5. The dither algorithm may have the dithered output v that is computed by thresholding the desired greyscale against the value of the mask at the given pixel (e.g., using Equation 1).

In particular embodiments, the system may use a monochrome mask for all three color channels of RGB for color dithering with each color channel being dithered independently. In particular embodiments, the color dithering may be performed using just one monochrome mask by exploiting the properties of barycentric coordinates. In particular embodiments, the system may use the four vertices of the tetrahedron to represent the four primary colors of the RGBK color space. For any color that fall within this RGBK color space, it can be expressed as a linear combination of tetrahedron vertices $v = [v_1, v_2, v_3, v_4]$ and their associated barycentric weights w = [$w_1, w_2, w_3, w_4$], as shown in the following equation:

$$C = wv^T$$

$$(3)$$

where, $v_x$ represents the vertices of the tetrahedron each corresponding to a primary color of a color space; $w_x$ represents the barycentric weights values. In particular embodiments, the system may assign subsets of dots of the monochrome dithering mask to the RGBK colors respectively based on the respective proportions as determined by the barycentric weights of w = [$w_1, w_2, w_3, w_4$]. As a result, the system may represent any color as a mixture of four colors (e.g., RGBK) with the appropriate dot densities. For example, for a color falling at the center of the RGBK color space, the dot subsets (assigned to RGBK) in the monochrome dither mask may be turned on in proportion of $w$ = [¼ ¼ ¼ ¼] and the resultant color C may appear to be 25% grey (as represented by 25% of red dots, 25% of green dots, 25% of blue dots, and 25% of dots being turned off). Thus, for any target color, the system may represent its respective dot color densities in terms of barycentric ratios and then use the previously generated monochrome mask to determine the dot pattern for representing the target color.

In particular embodiments, the process of determining the tetrahedron vertex for representing the target color may be described by the following equation:

$$v = \text{the first } v_k \text{ for which } \sum_1^k w_k > q \qquad (4)$$

where, $w_k$ is the barycentric value for the vertex $v_k$, q is the threshold value of the dither mask of that pixel. In other words, the system may select tetrahedron vertex $v_k$ when the sum of the first $k$ barycentric weights exceeds the mask value q at that pixel. The selected tetrahedron vertex $v_k$ may correspond to the dithered color (e.g., a mix of one or more primary colors based on the proportions) that can be used to represent the target color. And the system may generate the corresponding dot patterns based on the selected vertex $v_k$. It is notable that because the dither mask dot pattern stratifies the stacking property (i.e., a dot pattern of a grayscale level includes all dot patterns of lower grayscale values), selecting the tetrahedron vertex $v_k$ using the Equation (4) may result in a mix of primary colors based on the percentages determined by the barycentric weight values to represent the target color, because once a vertex is selected, the current primary color associated with this vertex and all other colors that are assigned to lower percentage values are accumulatively selected too. It is notable that, in particular embodiments, this method may impose the spatial stacking property but not color stacking property because the dots may be colored by proportions only.

In particular embodiments, the system using a monochrome mask for color dithering may have improved display quality by having the gray patches that are noticeably smoother for the color dither case due to the way in which the HVS' relative chrominance insensitivity at higher spatial frequencies is exploited by the color dither algorithm. In particular embodiments, this solution may be useful when the hardware cannot perform the cross-channel operation or when it is unclear whether the hardware can perform cross-channel operations. In particular embodiments, the color dithering algorithm using the same monochrome mask for RGB color channels may provide improved image quality without using additional memory resources, while allowing the display system to have a reduced the bit depth.

Although it is possible to extend the monochrome mask approach to enable color dithering, this method may have some limitations. The system using the monochrome mask to perform color dithering may allow controlling the proportions of the dot colors but cannot generate dither patterns which vary with hue (which was a necessary requirement for some AR/VR systems). In other words, the monochrome mask design may not be aware of the chromatic properties of the HVS. Furthermore, the system using the monochrome mask may not account for a mixed pixel pitch either. The dithering approach using the monochrome mask may have temporal artifacts (e.g., flickering from one color to another color between frames because it lacks spatial constraint between colors). A monochrome mask may not be able to generate dither mask with dot patterns that vary with hue and cannot account for panel or subpixel layouts. It is notable that, in particular embodiments, this method may impose the spatial stacking property but not color stacking property because the dots may be colored by proportions only.

In particular embodiments, the color dither mask may be constructed by extending the concept of a threshold to the color domain. Assuming the RGBK tetrahedron color space, the system may generate a four-color dither pattern at its centroid w = [¼ ¼ ¼ ¼]. The system may define paths from the centroid to its vertices and generate dither patterns along those paths which satisfy the color stacking property. Moving from the centroid towards the red vertex, for example, at some point a given dot may turn red, and after that, the dot may remain red for all the color that are more red. The point at which it turns red may correspond to a threshold. Similar principle may apply for the green, blue and black vertices. As a result, the system may determine a barycentric threshold for that pixel. The system may repeat this process and generate a color dither mask. In particular embodiments, the system may use a dithering algorithm as shown in the following equation:

$$v = v_k \text{ for which } k = argmax\left\{\frac{w_k}{q_k}\right\} \tag{5}$$

where $q_k$ *are* the barycentric coordinates of the color dither mask at the given pixel. For any color w in the tetrahedron v, the tetrahedron vertex $v_k$ may be chosen according to Equation (5). At a high level, Equation (5) may describe the dithering process rather than the dither mask generating process, by dividing the tetrahedron into four volumes and picking the largest volume. By contrast, Equation (4) may divide a line into segments and pick the longest segment.

FIG. 6 illustrates an example color dither mask 600. In particular embodiments, the system may use a method of generating color dither masks by exploiting (1) the chromatic channels of the human visual system (HVS) and (2) subpixel-geometry layout of the display. The system may generate a dither mask for each of the RGB color channels. Each mask may include a number of stacked dot patterns each corresponding to a particular grayscale level within a target grayscale level range. The dot patterns in each mask may have a spatial stacking property so that the dot pattern of each grayscale level may include all the dot patterns corresponding to all lower grayscale levels. Each mask pattern may be fixed and may have blue noise distribution, which allows the dithering patterns to not move from frame to frame, eliminating the "swimming" artifacts found in error-propagation method. It is notable that the example dither mask in FIG. 6 is printed in black and white to illustrates its dot patterns. Ideally, a color dither mask may be presented and printed in a color figure with colored dot patterns.

In particular embodiments, the system may use a simulated annealing approach to determine the dot patterns for the dither masks (both monochrome masks and color masks). To determine these dot patterns for each mask, the system may first generate the dot patterns for the grayscale levels of 25%, 50%, and 75% (normalized) and then use these dot patterns as constraints to determine the dot patterns for the remaining grayscale levels. The dot pattern for 75% may include all the dots for 50%, which may further include all the dots for 25%. The system may first determine the number of dots (e.g., 50%) for the dot pattern of a particular grayscale level, and then determine the dot distribution using a simulated annealing process. For example, for 50%, the system may use the dot pattern for 25% as the initial dot pattern. Then, the system may allocate additional 25% dots that are non-fixed in positions. Such additional dots may be randomly selected from the remaining non-fixed dots. Then, the system may swap one dot or one group of dots (depending on the subpixel geometric layout) of a particular color channel to a different position(s), and calculate a perceptual error using a pre-determined cost function. The dots or dot groups may be swapped in pair and the pair of dots or pair of groups may be randomly selected in each optimization step. The system may track the estimated perceptual error values and compare with those calculated in previous steps. The system may keep the swapped dot position(s), if the perceptual error value becomes smaller, and may discard the swapped dot position(s), if the perceptual error value become greater. The system may repeat this process until the process converges and the generated dot pattern provides a minimized perceptual error value. The system may repeat this process to minimize the estimated perceptual error value as determined by the cost function to generate the optimized dither mask(s). To improve the computational efficiency for the offline mask generating process, the system may update the perceptual error based only on the changes at the swapped pixel locations. Furthermore, the system may impose a color stacking constraint to minimize the number of dot changes between grayscales and minimize potential flickers. For example, in each color channel of RGB, the dot patterns for a grayscale level $g_m$ may always contain the dot patterns for the grayscale level of $g_{m-1}$.

In particular embodiments, the cost function may include the model for the human visual system (HVS), which has different sensitivity in different chromatic channels and different spatial frequency ranges. The cost function may also include the subpixel-geometric layout model, which represents the geometric sizes, shapes, and layouts of the actual display subpixels of each color channel. The cost function itself may iterate through all RGB color channels and all available dots to determine an estimated perceptual error value for the current dot patterns with respect to the target grayscale level. Thus, in each optimization step, the perceptual error may be calculated with all three-color channels of RGB being considered even only one dot or one group of dots of a particular color has been swapped in this step. The system may track the estimated perceptual error values and compare with those calculated in previous steps and may keep the swapped dot position(s), if the error value becomes smaller, and may discard the swapped dot position(s), if the error value become larger. The system may repeat this process until the process converges and the generated dot pattern provides a minimized perceptual error value.

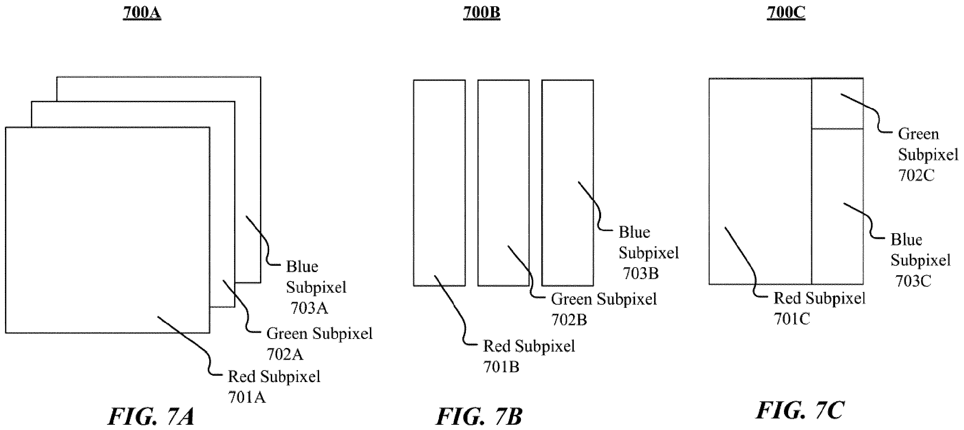

In particular embodiments, the system may determine whether to swap individual dots or swap grouped dots together based on the size of the sub-pixels. For example, if the subpixels of all color channels have the same size, the system may swap individual dots, each representing a single subpixel. If the subpixels of different color channels have different sizes, the system may use a group of dots to represent a single subpixel and may move this group of dots together during the swapping process. For instance, as shown in FIG. 7C, if the Red subpixel is 8 times of green pixel size and Blue pixel is 3 times of green pixel size, the system may use one dot to present a Green subpixel, use a group of 3 dots (arranged in one column according the Blue subpixel shape) to represent a Blue pixel, and use a group of 8 dots (arranged in two columns according the Red subpixel shape) to represent a Red subpixel. The dots in each group may need to be moved around together during the swapping process because each group of dots represents a single subpixel. By considering the actual geometry layout (sizes, shapes, arrangements, etc.) of the subpixels, the system may generate better dither masks that leads to more optimal display results.

As described earlier, designing the dither masks (thresholds) may involve generating the dot patterns D for each grayscale level g. The dot density may need to match the target desired grayscale g. By taking the HVS function h into account, the dot patterns of the dither masks may have a "blue-noise" property (perceptually uniform). Building a perceptually optimal dither mask may be treated as an optimization problem where the cost function/perceptual error ($e$) is to be minimized and the dot density of the dot pattern is matched the corresponding target grayscale value. In particular embodiments, the cost function used to optimize the dot patterns may be described by the following equation:

$$ e \; = \; \sum_{all\ channels} \sum_{all\ dots} (GD * h - g)^2 \qquad (6) $$

where, $G$ represents the subpixel geometry layout, $D$ represents the dot pattern being optimized, $h$ represents the human visual system (HVS) function, $g$ represents the target grayscale value, $e$ represents the estimated perceptual error. It is notable that the subpixel-geometric layout model may include information related to the geometric sizes, shapes, and position arrangements of the display subpixels of each color channel. In each optimization step, the cost function may iterate through all dots of the current dot pattern to calculate the perceptual error value, taking into consideration the subpixel geometry layout of the display. It is notable that the HVS function is not limited to luminance function because the 3 color masks may be co-optimized and the system may have the flexibility to account for both luminance and chrominance in HVS.

It is notable that the human visual system (HVS) may have different sensitivity in different chromatic channels and different spatial frequency ranges. For example, the HVS may be more sensitive in luminance and less sensitive to chromatic changes. In each optimization step, the cost function may iterate through all chromatic channels of the color space (e.g., a RGB color space or an opponent color space). For example, the system may iterate through all RGB color channels and all dots to determine an estimated perceptual error value for the current dot patterns with respect to the target grayscale level. Thus, in each optimization step, the perceptual error may be calculated taking into consideration all three-color channels of RGB color space (or in an opponent color space), even only one individual dot or one single group of dots of a particular color has been swapped in positions with a corresponding dot or a corresponding group of dots in this step.

In particular embodiments, optimizing in the color space may help to hide the chromatic dither noise at higher spatial frequencies to which the human visual system is less sensitive. In general, the human visual system may be more sensitive to luminance but less sensitive to chrominance. Thus, with the access to the chromatic channels, the dither masks of may be designed in a color-aware process (e.g., using color masks), the system may achieve more perceptually pleasing results. Furthermore, the masks of different color channels may be co-designed. In other words, the dither mask for one particular color channel may be generated taking into consideration the effect of all three color channels to have a minimum perceptual error. As a result, the system may provide better spatial image quality.

If the system generates the dither mask with the assumption of co-located subpixels of different color channels and use the generated dither mask to render patterns for an RGB stripe geometry, the spatial relationships between the color dots could be destroyed. In other words, the "blue noise" property of the dithering patterns may no longer holds. The resulting artifacts could be very unpleasant. If, on the other hand, the system generates a dither pattern taking into consideration of the underlying subpixel relationships (that is, the dot patterns are optimized to give blue noise patterns on a subpixel grid), the system can achieve much better dithering patterns. As such, in particular embodiments, the system may use a constrained dithering approach to generate the color dither masks under the constraints of the subpixel geometry layout (including size, shapes, position arrangements, etc.). The system may use the same framework for generating dither mask with an additional constraint to account for sub-pixelated layout such as RGB stripe geometry (e.g., red, green and blue dots are constrained to given columns with no overlaps). As a result, the system may generate color dither masks that have significant improvements in dither quality results.

In particular embodiments, imposing subpixel-geometry constraints during the optimization may reduce the degradation in image quality introduced by arbitrary pixel geometry. The displays may have different subpixel layouts. For example, the display may have multiple panels and the Red and Blue pixels may use ½ resolution to lower the risks in manufacturing or reduce data bandwidth. As another example, the display may be a sub-pixelated display (e.g., variable-current GaN displays) and may have different resolutions in RGB pixels to manage current density. In particular embodiments, the principles, methods, processes, and systems as described in this disclosure may be implemented in a framework that allow the display to have any subpixel layouts. In particular embodiments, the subpixel geometry layout may impose constraints on both the geometry and the dot density. Without the awareness of the underlying geometry, the dithered images may appear grainy and noisy. With the subpixel geometry layout constraints, the dot patterns may be more uniform and the image quality may be improved.

**FIGs. 7A-7C** illustrate three example layouts 700A, 700B, and 700C for display subpixels. In particular embodiments, the system may use dithering matrix design algorithms that assume that all subpixels of different colors of the same pixel have the same spatial location. In many display designs, this may not be the case. For example, the subpixels of different color channels may have different sizes, shapes, and locations. But since most modern displays have very small pixels and very high bit depth, this usually may be not problematic. For low bit-depth display technologies such as displays in AR/VR systems, which may be fundamentally reliant upon dithering, and for displays having novel subpixel geometries, it could be an important factor that may generate negative impact on the quality of dithered results. As an example and not by way of limitation, as shown in FIG. 7A, the display may be a multiple-panel display having three panels each for a color channel of RGB color channels and the pixel of each color may have the same size. In such scenario, the subpixels of different color channels may be assumed to be at the same location. Each subpixel may be represented by a single dot in the color dither mask for that color channel. Or alternatively, each subpixel of each color may be represented by a group of dots in the color dither mask for that color channel but the subpixels of different color channels may correspond to groups of dots each including the same number of dots.

As another example, the display may have a subpixel geometry with the RGB stripe layout, as shown in FIG. 7B, wherein the RGB subpixels have a stripe shape arranged vertically. As discussed earlier, each subpixel of this display may be represented by a group of dots in the color dither mask for that color channel. For instance, the RGB subpixels 701B, 702B, and 703B may each be represented by a group of four dots arranged vertically. Each group of four dots representing a subpixel may be moved around during the swapping process together. As another example, the display may have non-uniform subpixel geometry layout as shown in FIG. 7C. In this example, the Red subpixel may be 8 times of Green pixel size and Blue pixel may be 3 times of green pixel size. The system may use one dot (or a unit group of dots) to present a Green subpixel. The system may use a group of 3 dots (arranged in one column according to the Blue subpixel shape) to represent a Blue pixel, and may use a group of 8 dots (arranged in two columns according to the Red subpixel shape) to represent a Red subpixel. The dots in each group may need to be moved around together during the swapping process because each group of dots represents a single subpixel. By considering the actual geometry layout (sizes, shapes, arrangements, etc.) of the subpixels, the system may generate better dither masks that leads to more optimal display results.

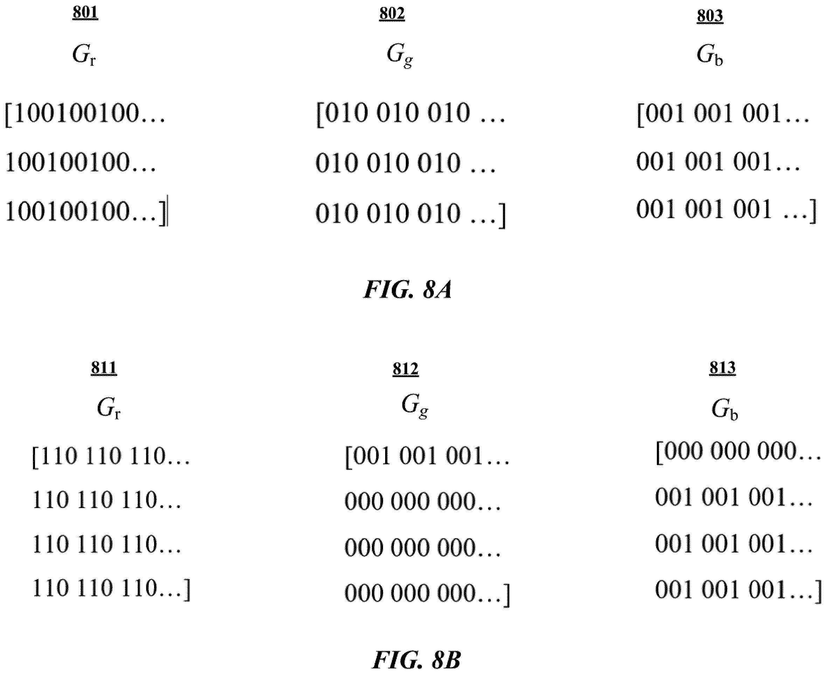

**FIGs. 8A-8B** illustrate example matrixes as the subpixel geometry layout representations (801, 802, 803, 811, 812, 813). As shown in Equation (6), the cost function used to determine the perceptual error values may include a representation $G$ for the subpixel geometry layout. This representation may impose the subpixel geometry layout constraint to the generating process of the color dither masks. As described earlier, the subpixel sizes and shapes may determine the size of the groups of dots that are used to represent individual subpixels. In cases where a subpixel of a particular color is larger than pixels of other color channels, the representation G could include a constraint that multiple dots in the mask need to move together. For example, if a red pixel is 4 times larger than a green pixel or a blue pixel (i.e., red subpixels size is $2 \times 2$, green and blue subpixels size is 1), there would be a constraint indicating that for red dots, a group of $2 \times 2$ dots must be chosen together and swapped together during the swapping process.

In particular embodiments, the subpixel geometry layout representation G may determine where the dots of a particular dither mask of a particular color channel can be positioned during the swapping process for generating the color dither mask. For RGB color channels, assuming $G_r$, $G_g$, and $G_b$. Each representation G could be represented as a matrix to encode where pixels of that color are located. As an example not by way of limitation, in a multi-panel display as shown in FIG. 7A, all 3 representations $G_r$, $G_g$, and $G_b$ would each be a matrix full of 1. That means the RGB dots in a color dither mask can be positioned (during the swapping process) into any position of the same mask. As another example, as shown in FIG. 7B, the sub-pixelated display may have stripe shape subpixels positioned in the vertical direction. As such, the $G_r$, $G_g$, and $G_b$ matrix may be shown in FIG. 8A. In other words, the red dots in the dither mask for Red color channel may be positioned only in the 1st, 4th, 7th, ... columns of the mask because the display may only have red subpixels at such positions. Similarly, the green dots in the dither mask for Green color channel may be positioned only in the 2st, 5th, 8th, ... columns of the mask because the display may only have Green subpixels at such positions. Similarly, the blue dots in the dither mask for Blue color channel may be positioned only in the 3st, 6th, 9th, ... columns of the mask because the display may only have blue subpixels at such positions.

As another example, as shown in FIG. 7C, the sub-pixelated display may have non-uniform subpixels for different color channels. The subpixel geometry layout representations $G_r$, $G_g$, and $G_b$ may be shown in FIG. 8B. In this example, the Red subpixel may have a size that is 8 times of Green pixel size and Blue pixel may have a size that is 3 times of Green pixel size. The system may use one dot (or a unit group of dots) to present a Green subpixel. The system may use a group of 3 dots (or three unit-groups of dots) arranged in one column according to the Blue subpixel shape to represent a Blue pixel. The system may use a group of 8 dots (or 8 unit-groups of dots) arranged in two columns according to the Red subpixel shape to represent a Red subpixel. The dots in each group may need to be moved around together during the swapping process because each group of dots represents a single subpixel. During the swapping process for optimizing the dither masks, the red dot groups in the red dither mask may be positioned only in the positions as shown by $G_r$. In other words, the red dots in the red dither mask may be positioned in the 1st, 2nd, 4th, 5th, 7th, 8th ... columns of the red mask. Similarly, the green dots or dot groups may be positioned only in the position as shown by $G_g$. In other words, the green dots in the green dither mask may be positioned in the 3rd, 6th, 9th, columns of the 1st, 5th, 9th, ... rows of the green mask. Similarly, the blue dot groups may be positioned in the position as shown by $G_b$. In other words, the blue dots in the blue mask may be positioned in the 3rd, 6th, 9th ... columns of the 2nd, 3rd, 4th, 6th, 7th, 8th ... rows of the blue mask. As such, by considering the actual geometry layout (sizes, shapes, arrangements, etc.) of the subpixels, the system may generate better dither masks that leads to more optimal display results. It is notable that while Fig 7C shows a particular example of arbitrary layout and a sub-pixelated display, the same method, process, and principle may be applied to any arbitrary layouts or/and multiple-panel display.

In particular embodiments, the dot patterns may be designed along K-W path, where K represents Black, and W represents white in the KRGB-YCMW color unit cube. The RGB dots may be allowed to overlap in this path, allowing a higher degree of freedom for pixel swapping via simulated annealing. Subpixel geometry constraints may be imposed, accounting for different pixel sizes for the RGB panels. The RGB dither masks may be co-designed to improve the perceptual quality. The color masks may be applied the same way as that for the monochrome mask. As such, the system may significantly improve the dither noise by the use of constrained dithering.

In particular embodiments, the color dithering approach, which uses color dither masks, may use 3 times of the storage memory comparing to the approach using the monochrome mask. However, it would allow the system to exploit unique pixel layouts of the display to achieve better dithering results. It is notable that in this disclosure the RGB stripe geometry is used an example, but the method is not limited thereto. The principle, method, and process may be applicable for all suitable subpixel layouts of displays (and for both multiple-panel and sub-pixelated displays). For example, the principle, method, and process may be applicable to the system using two display panels (rather than three) in which one panel has full resolution green subpixels and the other has a red/blue Bayer geometry. As another example, the display subpixels may be the 4μm red/blue subpixels with 2μm green subpixels combination. In particular embodiments, the color dithering approach using the color dither mask may have better optimized optical properties of the projector, because the human visual system model *h* (e.g., a weighting function) used to generate the dot patterns may incorporate information of the full-color modulation transfer function (MTF). As yet another example, a multi-primary approach may be used where display has more than three different colored emitters.

In particular embodiments, the system may access full-color pixel values and perform cross-channel operations for color dithering using a full-color dither mask and may significantly improve the dithering quality. The chromatic channels of HVS may be accessed during color mask design, which enables different vision models to be exploited in the same framework (e.g., the vision mode in opponent color space). The color masks may be generated accounting for the color stacking property, improving temporal performance. The color masks may allow the system to optimize for subpixels geometry in each color channel. The color masks may be generated using a framework as described in this disclosure to handle sub-pixelated display with mixed-resolution geometries in multiple-panel display (e.g., ½ resolution Red pixels or/and Blue pixels). The color masks may be generated using the framework so that it can optimize in different color space (e.g., the RGB color space or opponent color space).

Full-color dither masks may be harder to construct but may provide a number of advantages over the monochrome mask approach. For example, the monochrome mask may only be able to assert a spatial stacking property (or density stacking property), according to which, once a pixel is turned on for greyscale $g_n$, it stays on for all greyscales higher than $g_n$, but it may not be able to satisfy a color stacking property. In contrast, color dither masks may satisfy a color stacking property in addition to the spatial (density) stacking property. According to the color stacking property, if a pixel is turned red at some color $w = [w_1\ w_2\ w_3\ w_4]$, then it may remain red for all colors that are more red than w. Similarly, if a pixel is turned green at some color $w = [w_1\ w_2\ w_3\ w_4]$, then it may remain green for all colors that are more green than w. Similarly, if a pixel is turned blue at some color $w = [w_1\ w_2\ w_3\ w_4]$, then it may remain blue for all colors that are more blue than w. This may greatly reduce the possibility of flickering pixels with changes in greyscale. Furthermore, a color mask may contain within its information about the underlying color channel geometry.

In particular embodiments, the online implementation of constrained dithering may involve a thresholding process, where the dithered patterns may be obtained by comparisons between the input pixel value and the mask value, as shown in the following equation:

$$p'_{x,y;c} = \begin{cases} 1 & if\ p_{x,y;c} \geq M_{x,y;c} \\ 0 & otherwise \end{cases} \qquad (7)$$

where, $p_{x,y}$ is the target pixel value for the (*x, y*) position, $M_{x,y}$ is the threshold value for the dot at the (*x, y*) position, c represents the color channel, 1 represents that this dot should be "turned on" and thus will be included in the dot pattern for representing the target pixel value, 0 represents that this dot should not be turned on and thus will not be included in the dot pattern for representing the target pixel value. At run time, the system may select a target pixel value (e.g., 70%) having RGB color components. The system may compare each color component value to the threshold values of the corresponding color dither mask. If the color component value of the target pixel value is greater than or equal to a threshold, the system may include (i.e., turn on) that dot in the result dot pattern. If the color component value of the target pixel is smaller than the threshold value, the system may exclude (i.e., turn off) that dot in the result dot pattern. A total of three masks may be needed for RGB color space (e.g., *c* = R, G, B). Nevertheless, the computational complexity and power requirements for constrained dithering may be the same as for monochrome dithering.

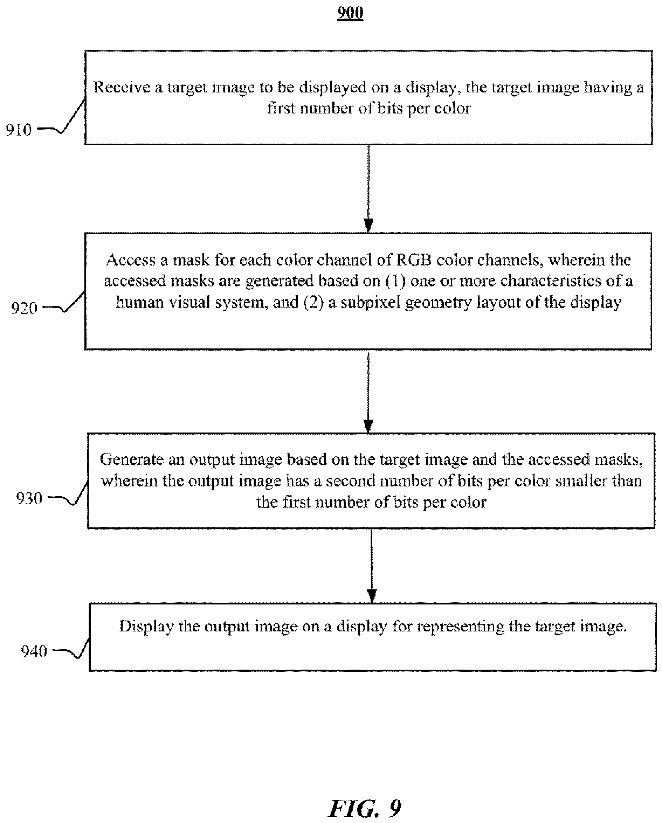

**FIG. 9** illustrates an example method 900 for displaying an image using dithering technique. The method may begin at step 910, where a computing system may receive a target image to be displayed on a display, the target image having a first number of bits per color. At step 920, the system may access a mask for each color channel of RGB color channels. The accessed masks may be generated based on (1) one or more characteristics of a human visual system, and (2) a subpixel geometry layout of the display. At step 930, the system may generate an output image based on the target image and the accessed masks. The output image may have a second number of bits per color smaller than the first number of bits per color. At step 940, the system may display the output image on a display for representing the target image.

In particular embodiments, the mask of that color channel may include a number of dot patterns each corresponding to a grayscale level for that color channel. These dot patterns may satisfy a spatial stacking property. In particular embodiments, each dot pattern of a particular grayscale may include all dot patterns of lower grayscale levels of that color channel. In particular embodiments, the masks for the RGB color channels may satisfy a color stacking property. A dot that is assigned to a color may remain that color when a target color becomes brighter along a color space path starting from black and ending at white. In particular embodiments, the mask for that color channel may be generated using a simulated annealing process including: generating a first dot pattern for a target grayscale level of that color channel, calculating a first perceptual error for the first dot pattern, generating a second dot pattern by swapping at least one dot in the first dot pattern to a different dot position, calculating a perceptual error for the second dot pattern, and determining whether to keep or discard the second dot pattern based on a comparison of the first perceptual error and the second perceptual error.

In particular embodiments, the first and second perceptual errors may be calculated using a cost function. The cost function may have a first constraint based on the one or more characteristics of the human visual system and a second constraint based the subpixel geometry layout of the display. In particular embodiments, the one or more characteristics of the human visual system may be represented by a matrix representing different sensitives of the human visual system at different chromatic channels or within different spatial frequency ranges. In particular embodiments, the subpixel geometry layout of the display may be represented by a matrix representing sizes, shapes, and layouts of subpixels of the display. In particular embodiments, the cost function may iterate through multiple chromatic channels (e.g., RGB color channels) and all dots of a current dot pattern to determine a perceptual error value. In particular embodiments, when the display has a larger subpixel size in a current color channel, then at least one dot may include a group of dots that are swapped together to represent to a subpixel with the larger subpixel size. In particular embodiments, the dots being swapped may be randomly selected, and the dots may be swapped to the different dot position as constrained by the subpixel geometry layout of the display. In particular embodiments, the mask generated using the annealing process may provide a minimized perceptual error value.

Particular embodiments may repeat one or more steps of the method of FIG. 9, where appropriate. Although this disclosure describes and illustrates particular steps of the method of FIG. 9 as occurring in a particular order, this disclosure contemplates any suitable steps of the method of FIG. 9 occurring in any suitable order. Moreover, although this disclosure describes and illustrates an example method for displaying an image using dithering technique including the particular steps of the method of FIG. 9, this disclosure contemplates any suitable method for displaying an image using dithering technique including any suitable steps, which may include all, some, or none of the steps of the method of FIG. 9, where appropriate. Furthermore, although this disclosure describes and illustrates particular components, devices, or systems carrying out particular steps of the method of FIG. 9, this disclosure contemplates any suitable combination of any suitable components, devices, or systems carrying out any suitable steps of the method of FIG. 9.

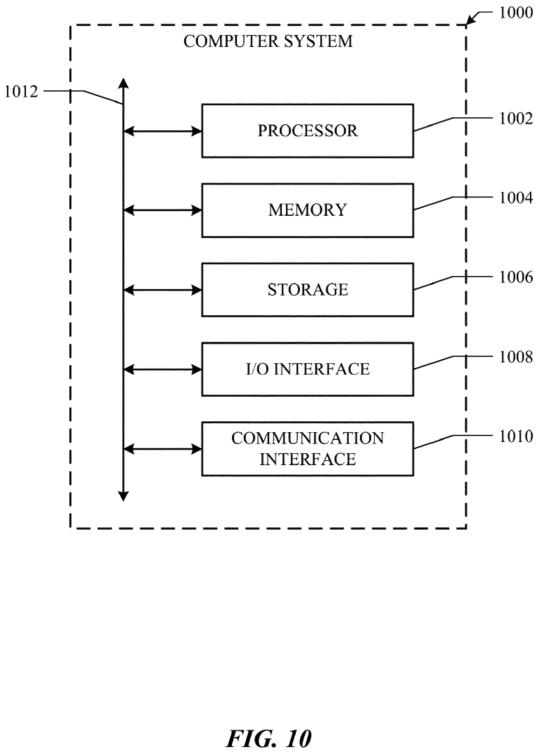

**FIG. 10** illustrates an example computer system 1000. In particular embodiments, one or more computer systems 1000 perform one or more steps of one or more methods described or illustrated herein. In particular embodiments, one or more computer systems 1000 provide functionality described or illustrated herein. In particular embodiments, software running on one or more computer systems 1000 performs one or more steps of one or more methods described or illustrated herein or provides functionality described or illustrated herein. Particular embodiments include one or more portions of one or more computer systems 1000. Herein, reference to a computer system may encompass a computing device, and vice versa, where appropriate. Moreover, reference to a computer system may encompass one or more computer systems, where appropriate.

This disclosure contemplates any suitable number of computer systems 1000. This disclosure contemplates computer system 1000 taking any suitable physical form. As example and not by way of limitation, computer system 1000 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, an augmented/virtual reality device, or a combination of two or more of these. Where appropriate, computer system 1000 may include one or more computer systems 1000; be unitary or distributed; span multiple locations; span multiple machines; span multiple data centers; or reside in a cloud, which may include one or more cloud components in one or more networks. Where appropriate, one or more computer systems 1000 may perform without substantial spatial or temporal limitation one or more steps of one or more methods described or illustrated herein. As an example and not by way of limitation, one or more computer systems 1000 may perform in real time or in batch mode one or more steps of one or more methods described or illustrated herein. One or more computer systems 1000 may perform at different times or at different locations one or more steps of one or more methods described or illustrated herein, where appropriate.

In particular embodiments, computer system 1000 includes a processor 1002, memory 1004, storage 1006, an input/output (I/O) interface 1008, a communication interface 1010, and a bus 1012. Although this disclosure describes and illustrates a particular computer system having a particular number of particular components in a particular arrangement, this disclosure contemplates any suitable computer system having any suitable number of any suitable components in any suitable arrangement.

In particular embodiments, processor 1002 includes hardware for executing instructions, such as those making up a computer program. As an example and not by way of limitation, to execute instructions, processor 1002 may retrieve (or fetch) the instructions from an internal register, an internal cache, memory 1004, or storage 1006; decode and execute them; and then write one or more results to an internal register, an internal cache, memory 1004, or storage 1006. In particular embodiments, processor 1002 may include one or more internal caches for data, instructions, or addresses. This disclosure contemplates processor 1002 including any suitable number of any suitable internal caches, where appropriate. As an example and not by way of limitation, processor 1002 may include one or more instruction caches, one or more data caches, and one or more translation lookaside buffers (TLBs). Instructions in the instruction caches may be copies of instructions in memory 1004 or storage 1006, and the instruction caches may speed up retrieval of those instructions by processor 1002. Data in the data caches may be copies of data in memory 1004 or storage 1006 for instructions executing at processor 1002 to operate on; the results of previous instructions executed at processor 1002 for access by subsequent instructions executing at processor 1002 or for writing to memory 1004 or storage 1006; or other suitable data. The data caches may speed up read or write operations by processor 1002. The TLBs may speed up virtual-address translation for processor 1002. In particular embodiments, processor 1002 may include one or more internal registers for data, instructions, or addresses. This disclosure contemplates processor 1002 including any suitable number of any suitable internal registers, where appropriate. Where appropriate, processor 1002 may include one or more arithmetic logic units (ALUs); be a multi-core processor; or include one or more processors 1002. Although this disclosure describes and illustrates a particular processor, this disclosure contemplates any suitable processor.

In particular embodiments, memory 1004 includes main memory for storing instructions for processor 1002 to execute or data for processor 1002 to operate on. As an example and not by way of limitation, computer system 1000 may load instructions from storage 1006 or another source (such as, for example, another computer system 1000) to memory 1004. Processor 1002 may then load the instructions from memory 1004 to an internal register or internal cache. To execute the instructions, processor 1002 may retrieve the instructions from the internal register or internal cache and decode them. During or after execution of the instructions, processor 1002 may write one or more results (which may be intermediate or final results) to the internal register or internal cache. Processor 1002 may then write one or more of those results to memory 1004. In particular embodiments, processor 1002 executes only instructions in one or more internal registers or internal caches or in memory 1004 (as opposed to storage 1006 or elsewhere) and operates only on data in one or more internal registers or internal caches or in memory 1004 (as opposed to storage 1006 or elsewhere). One or more memory buses (which may each include an address bus and a data bus) may couple processor 1002 to memory 1004. Bus 1012 may include one or more memory buses, as described below. In particular embodiments, one or more memory management units (MMUs) reside between processor 1002 and memory 1004 and facilitate accesses to memory 1004 requested by processor 1002. In particular embodiments, memory 1004 includes random access memory (RAM). This RAM may be volatile memory, where appropriate. Where appropriate, this RAM may be dynamic RAM (DRAM) or static RAM (SRAM). Moreover, where appropriate, this RAM may be single-ported or multi-ported RAM. This disclosure contemplates any suitable RAM. Memory 1004 may include one or more memories 1004, where appropriate. Although this disclosure describes and illustrates particular memory, this disclosure contemplates any suitable memory.

In particular embodiments, storage 1006 includes mass storage for data or instructions. As an example and not by way of limitation, storage 1006 may include a hard disk drive (HDD), a floppy disk drive, flash memory, an optical disc, a magneto-optical disc, magnetic tape, or a Universal Serial Bus (USB) drive or a combination of two or more of these. Storage 1006 may include removable or non-removable (or fixed) media, where appropriate. Storage 1006 may be internal or external to computer system 1000, where appropriate. In particular embodiments, storage 1006 is non-volatile, solid-state memory. In particular embodiments, storage 1006 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 1006 taking any suitable physical form. Storage 1006 may include one or more storage control units facilitating communication between processor 1002 and storage 1006, where appropriate. Where appropriate, storage 1006 may include one or more storages 1006. Although this disclosure describes and illustrates particular storage, this disclosure contemplates any suitable storage.

In particular embodiments, I/O interface 1008 includes hardware, software, or both, providing one or more interfaces for communication between computer system 1000 and one or more I/O devices. Computer system 1000 may include one or more of these I/O devices, where appropriate. One or more of these I/O devices may enable communication between a person and computer system 1000. As an example and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 1008 for them. Where appropriate, I/O interface 1008 may include one or more device or software drivers enabling processor 1002 to drive one or more of these I/O devices. I/O interface 1008 may include one or more I/O interfaces 1008, where appropriate. Although this disclosure describes and illustrates a particular I/O interface, this disclosure contemplates any suitable I/O interface.

In particular embodiments, communication interface 1010 includes hardware, software, or both providing one or more interfaces for communication (such as, for example, packet-based communication) between computer system 1000 and one or more other computer systems 1000 or one or more networks. As an example and not by way of limitation, communication interface 1010 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 1010 for it. As an example and not by way of limitation, computer system 1000 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 1000 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 1000 may include any suitable communication interface 1010 for any of these networks, where appropriate. Communication interface 1010 may include one or more communication interfaces 1010, where appropriate. Although this disclosure describes and illustrates a particular communication interface, this disclosure contemplates any suitable communication interface.

In particular embodiments, bus 1012 includes hardware, software, or both coupling components of computer system 1000 to each other. As an example and not by way of limitation, bus 1012 may include an Accelerated Graphics Port (AGP) or other graphics bus, an Enhanced Industry Standard Architecture (EISA) bus, a front-side bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 1012 may include one or more buses 1012, where appropriate. Although this disclosure describes and illustrates a particular bus, this disclosure contemplates any suitable bus or interconnect.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The scope of this disclosure encompasses all changes, substitutions, variations, alterations, and modifications to the example embodiments described or illustrated herein that a person having ordinary skill in the art would comprehend. The scope of this disclosure is not limited to the example embodiments described or illustrated herein. Moreover, although this disclosure describes and illustrates respective embodiments herein as including particular components, elements, feature, functions, operations, or steps, any of these embodiments may include any combination or permutation of any of the components, elements, features, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative. Additionally, although this disclosure describes or illustrates particular embodiments as providing particular advantages, particular embodiments may provide none, some, or all of these advantages.

## Claims

1. A method comprising, by a computing system:

   receiving a target image to be displayed on a display, the target image having a first number of bits per color;
   accessing a mask for each color channel of RGB color channels, wherein the accessed masks are generated based on (1) one or more characteristics of a human visual system, and (2) a subpixel geometry layout of the display;
   generating an output image based on the target image and the accessed masks, wherein the output image has a second number of bits per color smaller than the first number of bits per color; and

displaying the output image on the display for representing the target image.

2. The method of Claim 1, wherein the display has the second number of bits per color that is smaller than the first number bits per color of the target image.

3. The method of Claim 1 or claim 2, wherein the mask of that color channel comprises a plurality of dot patterns each corresponding to a grayscale level for that color channel, and wherein the plurality of dot patterns satisfies a spatial stacking property.

4. The method of Claim 3, wherein each dot pattern of the plurality of dot patterns comprises all dot patterns of lower grayscale levels of that color channel.

5. The method of Claim 1, wherein the masks for the RGB color channels satisfy a color stacking property, and wherein a dot that is assigned to a color remains that color when a target color becomes brighter along a color space path starting from black and ending at white.

6. The method of any preceding Claim, wherein the mask for that color channel is generated using a simulated annealing process comprising:

   generating a first dot pattern for a target grayscale level of that color channel;
   calculating a first perceptual error for the first dot pattern;
   generating a second dot pattern by swapping at least one dot in the first dot pattern to a different dot position;
   calculating a perceptual error for the second dot pattern; and
   determining whether to keep or discard the second dot pattern based on a comparison of the first perceptual error and the second perceptual error.

7. The method of Claim 6, wherein the first and second perceptual errors are calculated using a cost function, and wherein the cost function has a first constraint based on the one or more characteristics of the human visual system and a second constraint based the subpixel geometry layout of the display.

8. The method of Claim 7, wherein the one or more characteristics of the human visual system are represented by a matrix representing different sensitives of the human visual system at different chromatic channels or within different spatial frequency ranges

9. The method of Claim 7 or claim 8, wherein the subpixel geometric layout of the display is represented by a matrix representing sizes, shapes, and layouts of subpixels of the display.

10. The method of one of Claims 7 to 9, wherein the cost function iterates through a plurality of chromatic channels and all dots of a current dot pattern to determine a perceptual error value.

11. The method of one of Claims 6 to 10, wherein, when the display has a larger subpixel size in a current color channel, and wherein the at least one dot comprises a group of dots that are swapped together to represent to a subpixel with the larger subpixel size.

12. The method of one of Claims 6 to 10, wherein the at least one dot being swapped is randomly selected, and wherein the at least dot is swapped to the different dot position as constrained by the subpixel geometry layout of the display.

13. The method of one of Claims 6 to 12, wherein the mask generated using the simulated annealing process provides a minimized perceptual error value.

14. One or more computer-readable non-transitory storage media embodying software that is operable when executed to perform the method of any preceding claim.

15. A system comprising:

   one or more non-transitory computer-readable storage media embodying instructions; and
   one or more processors coupled to the storage media and operable to execute the instructions to perform the method of any one of claims 1 to 13.

Headset 104

User 102

Controller 106

Computer 108

*FIG. 1A*

EP 4 318 448 A1

**100B**

Head-mounted Display 110

Frame 112

Display 114

Display 114

Computer 120

*FIG. 1B*

EP 4 318 448 A1

**100C**

EP 4 318 448 A1

Display Engine 130

Display System 140

Input Data Bus 131

Transform Block **133**

Texture Memory **132**

Pixel Block **134**

Tile/Surface Pair 144

| DDI **142A** | μLED Red Channel **144A** |
| DDI **142B** | μLED Green Channel **144B** |
| DDI **142C** | μLED Blue Channel **144C** |

Pixels 138

Display Block **135**

Output Data Bus 142

Display Data 159

*FIG. 1C*

FIG. 1D

**200A**

Light Source 212

Light Source Assembly 210

Optics System 214

Controller 216

Image Light 219

Coupling Element 218

Eye 202

Output Waveguide 204

Decoupling Elements 206

*FIG. 2A*

**200B**

Light Emitters 222

220

Mirror 224

Axis 225

Light 223

L1

Light Source 220

Reflected Light 226B

Reflected Light 226A

Row 1

Row P

Image Field 227

L2

228

Pixel Locations 229

*FIG. 2B*

EP 4 318 448 A1

Coupling Area 306A

Emitter Array Set 308A

Decoupling Area 304

Divider Line 309A

Divider Line 309B

Waveguide Configuration 302

Coupling Area 306B

Emitter Array Set 308B

*FIG. 3A*

EP 4 318 448 A1

**300B**

Coupling Area 330  D1  Projector Device 350

Coupling Element 334A

Coupling Element 334B  Support Structure 354

Coupling Element 334C

Blue Image 320B

Green Image 320C  Red Image 320A

Light Emitters 352

Propagation Area 310

Decoupling Elements 336B  Decoupling Elements 336A

Pupil Replication 322

Propagation Area 310

Top Surface 318A

Bottom Surface 318B

Waveguide 342

*FIG. 3B*

30

*FIG. 4A*

*FIG. 4B*

*FIG. 4C*

**400D**

Continuous tone

Dithered

*FIG. 4D*

600

*FIG. 6*

500

*FIG. 5*

**700A**

**700B**

**700C**

Blue
Subpixel
703A

Green Subpixel
702A

Red Subpixel
701A

**FIG. 7A**

Blue
Subpixel
703B

Green Subpixel
702B

Red Subpixel
701B

**FIG. 7B**

Green
Subpixel
702C

Blue
Subpixel
703C

Red Subpixel
701C

**FIG. 7C**

33

801

$G_r$

[100100100…

100100100…

100100100…]

802

$G_g$

[010 010 010 …

010 010 010 …

010 010 010 …]

803

$G_b$

[001 001 001…

001 001 001…

001 001 001 …]

*FIG. 8A*

811

$G_r$

[110 110 110…

110 110 110…

110 110 110…

110 110 110…]

812

$G_g$

[001 001 001…

000 000 000…

000 000 000…

000 000 000…]

813

$G_b$

[000 000 000…

001 001 001…

001 001 001…

001 001 001…]

*FIG. 8B*

EP 4 318 448 A1

**900**

Receive a target image to be displayed on a display, the target image having a first number of bits per color

910

Access a mask for each color channel of RGB color channels, wherein the accessed masks are generated based on (1) one or more characteristics of a human visual system, and (2) a subpixel geometry layout of the display

920

Generate an output image based on the target image and the accessed masks, wherein the output image has a second number of bits per color smaller than the first number of bits per color

930

Display the output image on a display for representing the target image.

940

*FIG. 9*

*FIG. 10*

Europäisches
Patentamt

European
Patent Office

Office européen
des brevets

# EUROPEAN SEARCH REPORT

**Application Number**

EP 23 18 8097

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 734 369 A (PRIEM CURTIS [US] ET AL) 31 March 1998 (1998-03-31) * column 5 – column 12; figures 1-8 * ----- | 1-15 | INV. G09G3/20 G09G5/02 |

TECHNICAL FIELDS
SEARCHED      (IPC)

G09G

The present search report has been drawn up for all claims

| Place of search | Date of completion of the search | Examiner |
|---|---|---|
| Munich | 8 November 2023 | Gartlan, Michael |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

................................................................

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 23 18 8097

This annex lists the patent family members relating to the patent documents cited in the above-mentioned European search report.
The members are as contained in the European Patent Office EDP file on
The European Patent Office is in no way liable for these particulars which are merely given for the purpose of information.

08-11-2023

| Patent document cited in search report | | Publication date | Patent family member(s) | Publication date |
|---|---|---|---|---|
| US 5734369 | A | 31-03-1998 | NONE | |

For more details about this annex : see Official Journal of the European Patent Office, No. 12/82

EPO FORM P0459